# EUROPÄISCHE PATENTANMELDUNG

(11) **EP 3 820 011 A1**
(43) Veröffentlichungstag der Anmeldung: **12.05.2021**
(21) Anmeldenummer: 20020444.4
(22) Anmeldetag: 01.10.2020
(51) Int. Cl.: H02J 3/32

(54) **LASTVERWALTUNGSSYSTEM UND VERFAHREN ZUR REGELUNG EINES SOLCHEN LASTVERWALTUNGSSYSTEMS**

(30) Priorität: 11.11.2019 DE 102019130337
(71) Anmelder: Dr.Ing. h.c. F. Porsche Aktiengesellschaft, 70435 Stuttgart (DE)
(72) Erfinder: HEYNE, Raoul, 75446 Wiernsheim (DE); SCHNEIDER-SCHAPER, Alexander, 75446 Wiernsheim (DE); REZAC, Martin, Praha 5 (CZ); SOLE, Barry, 75175 Pforzheim (DE)

(57) **Zusammenfassung**

Die Erfindung betrifft ein Lastverwaltungssystem (20) zur Verwaltung von in einem Energieverteilungsnetz (100) vorhandenen Lasten. Das Lastverwaltungssystem (20) umfasst eine Regelungseinheit (30) und wenigstens zwei jeweils mittels eines Signalkabels (41, 43, 45) mit der Regelungseinheit (30) verbundene Stromwandler (40, 42, 44). Ein erster Stromwandler (40) der wenigstens zwei Stromwandler (40, 42, 44) ist derart in dem Energieverteilungsnetz (100) angeordnet, dass er geeignet ist, eine Stromstärke, die in einer mit einem Energieversorgungsunternehmen verbundenen Netzanschlussleitung (110) des Energieverteilungsnetzes (100) vorherrscht, zu messen. Ein zweiter Stromwandler (42) der wenigstens zwei Stromwandler (40, 42, 44) ist derart in dem Energieverteilungsnetz (100) angeordnet, dass er geeignet ist, die Stromstärke, die in einer wenigstens eine Ladestation (120) des Energieverteilungsnetzes (100) speisenden Stromleitung (112) des Energieverteilungsnetzes (100) vorherrscht, zu messen.

## Beschreibung

Die Erfindung betrifft ein Lastverwaltungssystem und ein Verfahren zur Regelung eines solchen Lastverwaltungssystems.

Ein solches Lastverwaltungssystem dient zur Verwaltung von in einem Energieverteilungsnetz vorhandenen Lasten. Ein solches Lastverwaltungssystem kann auch als Lastmanagementsystem bezeichnet werden. Elektrisch angetriebene Kraftfahrzeuge können mit hohen Gleichspannungen und Strömen mittels einer Ladestation geladen werden. Solche Ladestationen können auch Bestandteil eines solchen Energieverteilungsnetzes sein. Durch den Ladevorgang des elektrisch angetriebenen Kraftfahrzeugs kann das Energieverteilungsnetz zu stark beansprucht werden, was im schlimmsten Fall zu einem Totalausfall des Energieverteilungsnetzes und insbesondere einer Netzanschlussleitung des Energieverteilungsnetzes führen kann.

Ein solches Energieverteilungsnetz ist insbesondere ein Niederspannungsverteilungsnetz. Das Energieverteilungsnetz kann ein Energieverteilungsnetz eines Haushalts oder einer Betriebsstätte sein. Handelt es sich bei dem Energieverteilungsnetz insbesondere um ein Energieverteilungsnetz einer Betriebsstätte, so kann ein Totalausfall zu einem hohen wirtschaftlichen Schaden führen.

Daher werden häufig höhere Netzleistungen für das Energieverteilungsnetz beantragt oder vorgesehen, wenn die Installation einer solchen Ladestation im Energieverteilungsnetz beabsichtigt ist.

Werden elektrisch betriebene Kraftfahrzeuge mittels der Ladestation geladen, so besteht einerseits die Anforderung, das Kraftfahrzeug möglichst kostengünstig zu laden und andererseits das Kraftfahrzeug möglichst schnell zu laden. Für letzte Anforderung sollte möglichst viel Leistung zum Laden des Kraftfahrzeuges zur Verfügung gestellt werden. Sind darüber hinaus im Energieverteilungsnetz energieerzeugende Einrichtungen vorhanden, kann ein weiteres Bestreben sein, das Kraftfahrzeug möglichst durch einen hohen Anteil der mittels der energieerzeugenden Einrichtungen selbst erzeugten Energie zu laden.

Für solche Energieverteilungsnetze sind intelligente elektrische Stromzähler, sogenannte Smart Meter bekannt, die den Stromverbrauch überwachen und versuchen, den Strom dann zu nutzen, wenn ein besonders günstiger Stromtarif angewandt wird.

Aus der Druckschrift US 2016/137087 A ist eine intelligente Ladestation für ein Wohn- oder Geschäftshaus bekannt, welches mit Sensoren, die zum Messen des Ladestroms und der Ladespannung sowie der angeschlossenen Phasen dienen, versehen ist.

Aus der Druckschrift US 2014/077762 A ist eine intelligente Ladestation für ein Wohnhaus oder ein anderes Gebäude bekannt, die den Stromverbrauch aller Geräte überwacht.

Aus der Druckschrift US 2014/062401 A ist ein Verfahren zum intelligenten Laden von Elektrofahrzeugen bekannt, wobei das Laden zuhause oder in einer kommerziellen Installation erfolgt. Dabei wird der Ladestrom überwacht.

Aus der Druckschrift US 2011/248678 A ist ein intelligentes Batteriemanagementsystem bekannt, das Eingaben von Strom- und anderen Sensoren empfängt.

Aus der Druckschrift CN 109130935 A ist ein intelligentes Überwachungssystem für Elektrofahrzeuge bekannt.

Es ist die Aufgabe der vorliegenden Erfindung, ein Lastverwaltungssystem zur Verwaltung von in einem Energieverteilungsnetz vorhandenen Lasten vorzuschlagen, das einen hohen Schutz vor Totalausfall des Energieverteilungsnetzes aufweist. Es ist eine weitere Aufgabe der vorliegenden Erfindung, ein Lastverwaltungssystem der eingangs genannten Art vorzuschlagen, das ermöglicht, die maximal in dem Netz zur Verfügung stehende Leistung für das Laden des Kraftfahrzeugs zu nutzen. Es ist eine weitere Aufgabe der vorliegenden Erfindung, den Anteil an selbst erzeugter Energie, der für das Laden des Kraftfahrzeugs verwendet wird, zu maximieren. Eine weitere Aufgabe der vorliegenden Erfindung ist es, ein Lastverwaltungssystem der eingangs genannten Art vorzuschlagen, das ein möglichst kostengünstiges Laden des Kraftfahrzeugs ermöglicht. Letztlich ist es eine Aufgabe der vorliegenden Erfindung, ein Lastverwaltungssystem der eingangs genannten Art vorzuschlagen, das es ermöglicht, die Netzanschlussleistung auf ein Minimum zu reduzieren.

Die Aufgabe wird durch ein Lastverwaltungssystem nach Anspruch 1 und ein Verfahren zur Regelung eines solchen Lastverwaltungssystems nach Anspruch 6 gelöst.

Das erfindungsgemäße Lastverwaltungssystem umfasst eine Regelungseinheit und wenigstens zwei jeweils mittels eines Signalkabels mit der Regelungseinheit verbundene Stromwandler. Ein erster Stromwandler der wenigstens zwei Stromwandler ist derart in dem Energieverteilungsnetz angeordnet, dass er geeignet ist, eine Stromstärke, die in einer mit einem Energieversorgungsunternehmen verbundenen Netzanschlussleitung des Energieverteilungsnetzes vorherrscht, zu messen. Ein zweiter Stromwandler der wenigstens zwei Stromwandler ist derart in dem Energieverteilungsnetz angeordnet, dass er geeignet ist, die Stromstärke, die in einer wenigstens eine Ladestation des Energieverteilungsnetzes speisenden Stromleitung des Energieverteilungsnetzes vorherrscht, zu messen.

Durch die erfindungsgemäße Ausgestaltung des Lastverwaltungssystems lässt sich ein hoher Schutz vor einem Totalausfall des Energieverteilungsnetzes erzielen. Durch die erfindungsgemäße Ausgestaltung des Lastverwaltungssystems lässt sich die maximale, für das Laden eines Kraftfahrzeugs verfügbare Leistung an einer Ladestation bereitstellen. Durch die erfindungsgemäße Ausgestaltung des Lastverwaltungssystems lässt sich die erforderliche Netzanschlussleistung für das Energieverteilungsnetz reduzieren, insbesondere, wenn energieerzeugende Einrichtungen im Energieverteilungsnetz vorhanden sind.

In einer bevorzugten Ausgestaltung umfasst das Lastverwaltungssystem ferner wenigstens einen dritten Stromwandler, der derart in dem Energieverteilungsnetz angeordnet ist, dass er geeignet ist, eine Stromstärke, die in einer Einspeiseleitung des Energieverteilungsnetzes, die mit einer energieerzeugenden Einrichtung des Energieverteilungsnetzes verbunden ist, vorherrscht, zu messen.

Diese Ausgestaltung ermöglicht es, den Anteil an selbst erzeugter Energie, der für das Laden des Kraftfahrzeugs verwendet wird, zu maximieren.

Vorzugsweise ist die Regelungseinheit ferner mit einer Spannungsmesseinrichtung versehen, die geeignet ist, eine auf wenigstens einer Stromphase anliegende Spannung, insbesondere die auf einer Stromphase der Netzanschlussleitung anliegende Spannung zu messen.

In einer bevorzugten Ausgestaltung sind die Stromwandler analoge Stromwandler.

Vorzugsweise umfasst die Regelungseinheit ferner ein Kommunikationsmodul zur kabelgebundenen Kommunikation und/oder zur Kommunikation mittels Funksignalen.

Die Erfindung betrifft ferner ein Verfahren zur Regelung eines erfindungsgemäßen Lastverwaltungssystems. Das Verfahren umfasst folgende Verfahrensschritte:
- kontinuierliches Messen der in der Netzanschlussleitung vorherrschenden Stromstärke mittels des ersten Stromwandlers; und
- Reduzieren eines Ladestroms der Ladestation, wenn die in der Netzanschlussleitung gemessene Stromstärke einen vorbestimmten ersten Schwellwert überschreitet.

In einer bevorzugten Ausgestaltung des Verfahrens wird die Ladestation abgeschaltet, wenn der Ladestrom einen vorbestimmten minimalen Ladestrom unterschreitet.

Vorzugsweise wird der Ladestrom der Ladestation ferner reduziert und/oder die Ladestation abgeschaltet, wenn ein Stromtarif, der zu diesem Zeitpunkt für die Netzanschlussleitung gilt, ein Hochtarif ist.

Diese Ausgestaltung ermöglicht es, die Kosten für das Laden eines Kraftfahrzeugs zu reduzieren.

In einer bevorzugten Ausgestaltung wird der Ladestrom der Ladestation erhöht, wenn die in der Netzanschlussleitung gemessene Stromstärke einen vorbestimmten zweiten Schwellwert unterschreitet.

Diese Ausgestaltung ermöglicht es, das Laden des Kraftfahrzeugs zu beschleunigen.

Vorzugsweise wird der Ladestrom der Ladestation ferner dann erhöht, wenn ein Stromtarif, der zu diesem Zeitpunkt für die Netzanschlussleitung gilt, ein Niedertarif ist.

Diese Ausgestaltung ermöglicht es weiterhin, die Kosten, die für das Laden des Kraftfahrzeugs anfallen, zu reduzieren.

In einer bevorzugten Ausgestaltung liest die Regelungseinheit ein Rundsteuersignal, das auf den mittels der Netzanschlussleitung bereitgestellten Strom aufmoduliert ist, aus, um zu bestimmen, ob ein Stromtarif, der zu diesem Zeitpunkt für die Netzanschlussleitung gilt, ein Niedertarif oder ein Hochtarif ist.

Einzelheiten und weitere Vorteile des erfindungsgemäßen Lastverwaltungssystems und des erfindungsgemäßen Verfahrens zur Regelung eines solchen Lastverwaltungssystems werden anhand des nachfolgend beschriebenen Ausführungsbeispiels erläutert. Dabei veranschaulicht:

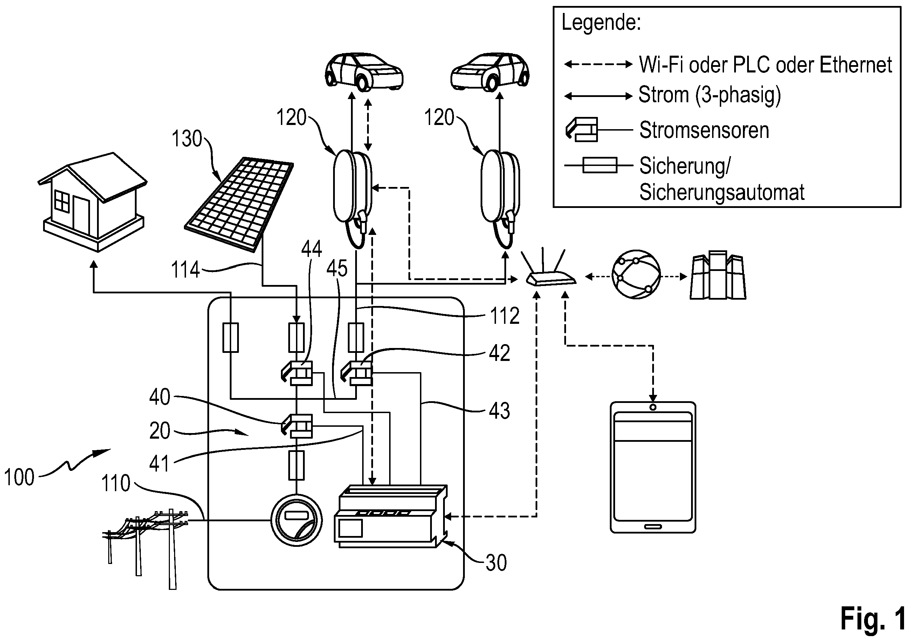

Figur 1: eine schematische Ansicht eines Energieverteilungsnetzes mit einem Lastverwaltungssystem nach dem Ausführungsbeispiel;

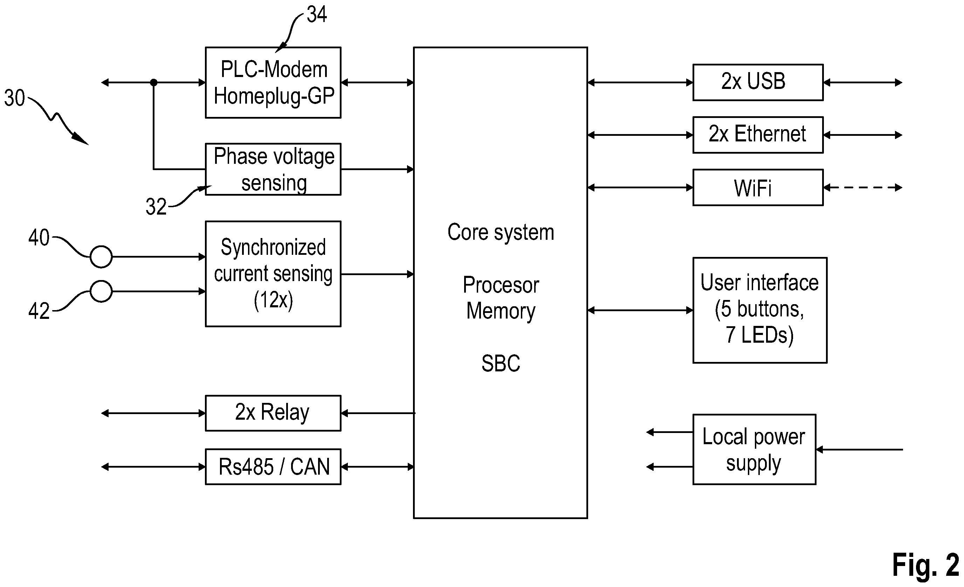

Figur 2: eine schematische Darstellung einer Regelungseinheit des Lastverwaltungssystems nach dem Ausführungsbeispiel;

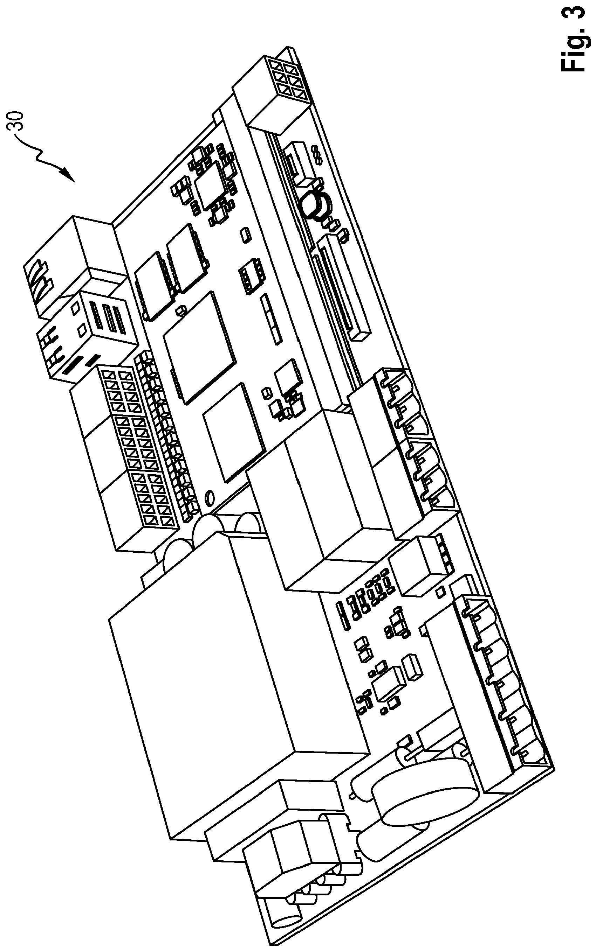

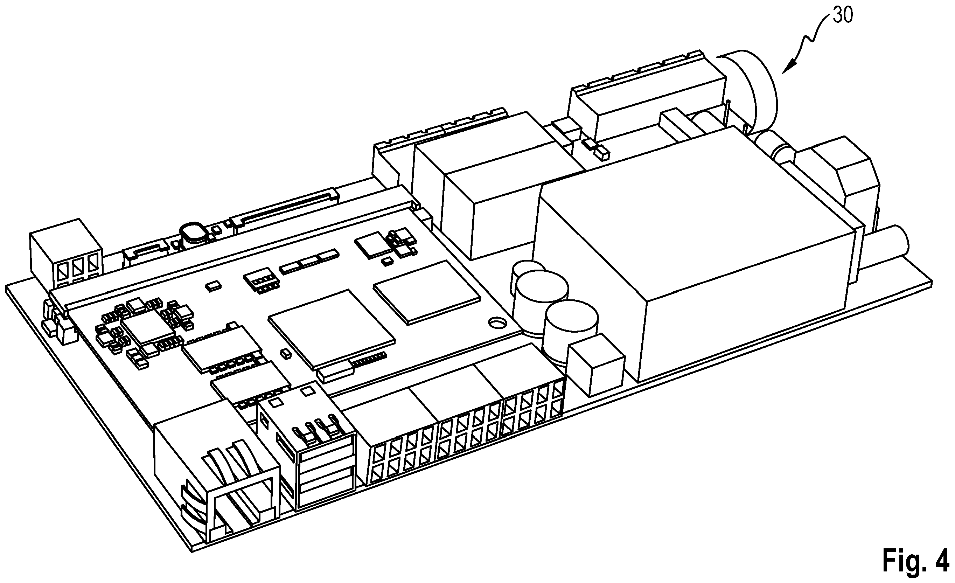

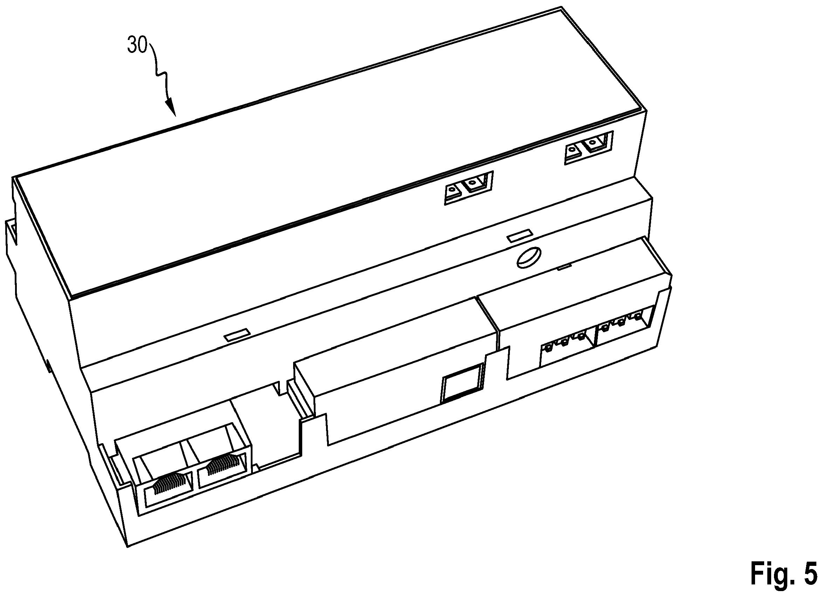

Figuren 3 bis 5: perspektivische Ansichten der Regelungseinheit des Lastverwaltungssystems nach dem Ausführungsbeispiel; und
Figuren 6 bis 36: eine Benutzeroberfläche eines Computerprogramms, welches zur Konfiguration der Regelungseinheit des Lastverwaltungssystems dient.

Die Anmeldung betrifft ein Lastverwaltungssystem 20 zur Verwaltung von in einem Energieverteilungsnetz 100 vorhandenen Lasten, umfassend eine Regelungseinheit 30 und wenigstens zwei jeweils mittels eines Signalkabels 41, 43, 45 mit der Regelungseinheit 30 verbundene Stromwandler 40, 42, 44. Ein erster Stromwandler 40 der wenigstens zwei Stromwandler 40, 42, 44 ist derart in dem Energieverteilungsnetz 100 angeordnet, dass er geeignet ist, eine Stromstärke, die in einer mit einem Energieversorgungsunternehmen verbundenen Netzanschlussleitung 110 des Energieverteilungsnetzes 100 vorherrscht, zu messen. Ein zweiter Stromwandler 42 der wenigstens zwei Stromwandler 40, 42, 44 ist derart in dem Energieverteilungsnetz 100 angeordnet, dass er geeignet ist, die Stromstärke, die in einer wenigstens eine Ladestation 120 des Energieverteilungsnetzes 100 speisenden Stromleitung 112 des Energieverteilungsnetzes 100 vorherrscht, zu messen.

Das Energieverteilungsnetz 100 gemäß dem Ausführungsbeispiel weist beispielsweise zwei Ladestationen 120 auf, die über eine selbe Stromleitung 112 des Energieverteilungsnetzes 100 gespeist werden.

Ist in dem Energieverteilungsnetz 100 jedoch nur eine Ladestation 120 angeordnet, kann der zweite Stromwandler 42 ein interner Stromwandler der Ladestation 120 sein. Auch bei mehreren in dem Energieverteilungsnetz 100 angeordneten Ladestationen 120 können die weiteren Stromwandler 42 interne Stromwandler der Ladestationen 120 sein, welche jeweils ihre Messdaten an die Regelungseinheit 30 übertragen, sodass die Regelungseinheit 30 alle Daten der zu den Ladestationen abgehenden Stromleitung oder Stromleitungen 112 von den Ladestationen 120 erhält.

Die Signalkabel 41, 43, 45 dienen zur Übertragung analoger oder digitaler Messdaten vom jeweiligen Stromwandler 40, 42, 44 zur Regelungseinheit 30. Werden digitale Messdaten vom Stromwandler 40, 42, 44 zur Regelungseinheit 30 übertragen, so können die Signalkabel 41, 43, 45 Netzwerkkabel (Ethernet-Kabel) sein. Alternativ können die Signalkabel 41, 43, 45 Stromleitungen sein und die Übertragung von digitalen oder analogen Messdaten vom Stromwandler 40, 42, 44 zur Regelungseinheit 30 erfolgt über diese Stromleitungen. Dabei erfolgt bevorzugt die Übertragung der Messdaten mittels einer sogenannten Powerline Communication (PLC). Als weitere Möglichkeit der Übertragung der Messdaten von den Ladestationen 120 zur Regelungseinheit 30 kann eine drahtlose WLAN-Verbindung dienen.

Die Ladestation 120 kann insbesondere eine Ladestation 120 mit variabler Ladeleistung sein.

Mit dem anmeldungsgemäßen Lastverwaltungssystem 20 lässt sich das Risiko eines Totalausfalls des Energieverteilungsnetzes minimieren. Ferner lässt sich mit dem anmeldungsgemäßen Lastverwaltungssystem die aus dem Energieverteilungsnetz 100 zur Verfügung stehende Leistung zum Laden einer Batterie eines elektrisch angetriebenen Kraftfahrzeugs mittels der Ladestation 120 maximieren.

Mittels des anmeldungsgemäßen Lastverwaltungssystems 20 lassen sich die wichtigsten Ströme, die in dem Energieverteilungsnetz vorherrschen, überwachen.

Das Energieverteilungsnetz 100 kann ein Energieverteilungsnetz einer Betriebsstätte oder ein Energieverteilungsnetz eines Hauses oder eines Wohngebäudes sein. Wird das anmeldungsgemäße Lastverwaltungssystem 20 in einem Wohngebäude, insbesondere in einem Einfamilienhaus verwendet, so kann das Lastverwaltungssystem 20 in eine intelligente Haussteuerung (Smart Home) integriert werden.

Große Ladeleistungen beim Laden von Elektrofahrzeugen können zu einer Überbelastung der Netzanschlussleitung 110 führen. Die Überbelastung kann schlimmstenfalls zu einem Totalausfall des Energieverteilungsnetzes 100 führen, wodurch ein besonders hoher wirtschaftlicher Schaden entstehen kann, wenn ein Energieverteilungsnetz 100 eine Betriebsstätte ist.

Die Ladungen von Elektrofahrzeugen sollen möglichst kostengünstig vorgenommen werden können. Da Netzanschlüsse im Preis steigen, je höher die mögliche Leistung ist, ist die Leistung aus dem Netz auf ein Minimum zu reduzieren, damit Netzanschlusskosten bzw. der Leistungspreis minimiert werden können, sofern zum Beispiel ein Ladepunkt mit einstellbarer Ladeleistung für Elektrofahrzeuge zugefügt wird.

Das Lastverwaltungssystem 20 kann ferner wenigstens einen dritten Stromwandler 44 umfassen, der derart in dem Energieverteilungsnetz 100 angeordnet ist, dass er geeignet ist, eine Stromstärke, die in einer Einspeiseleitung 114 des Energieverteilungsnetzes 100, die mit einer energieerzeugenden Einrichtung 130 des Energieverteilungsnetzes 100 verbunden ist, vorherrscht, zu messen.

Mittels eines Lastverwaltungssystems 20 gemäß dieser Ausgestaltung kann der Anteil an selbst erzeugter Energie für das Laden des Kraftfahrzeugs maximiert werden.

Die Regelungseinheit 30 kann ferner mit einer Spannungsmesseinrichtung 32 versehen sein, die geeignet ist, eine auf wenigstens einer Stromphase anliegende Spannung, insbesondere die auf einer Stromphase der Netzanschlussleitung 110 anliegende Spannung zu messen. Durch diese bevorzugte Ausgestaltung des Lastverwaltungssystems 20 lassen sich Energieverbräuche der mit dem Energieverteilungsnetz gespeisten Geräte überwachen.

Die Stromwandler 40, 42, 44 können analoge Stromwandler sein. Mittels dieser Ausgestaltung ist das Lastverwaltungssystem 20 mit allen weltweit eingesetzten Umrichtern zur Erzeugung des Ladestroms und der Ladespannung kompatibel.

Mittels des anmeldungsgemäßen Lastverwaltungssystems 20 wird ein Schutz gegen Totalausfall, bzw. ein Blackout-Schutz mit der gesamten intelligenten Ladeinfrastruktur kombiniert.

Die Regelungseinheit 30 kann ferner ein Kommunikationsmodul 34 zur kabelgebundenen Kommunikation und/oder zur Kommunikation mittels Funksignale umfassen.

Das Kommunikationsmodul 34 unterstützt insbesondere folgende Kommunikationsstandards:
- Bus-Systeme: CAN und RS485;
- Protokolle: EEBus. UDP, TCP, TLS, IPv4, IPv6;
- Anschlüsse: USB 2.0/3.0; LAN und WLAN, PLC (Powerline Communication) via HomePlug Standard.

Neben einem Blackout-Schutz wird bei der Lastüberwachung auch ein Leitungsschutz ermöglicht, da die verschiedenen Erzeuger und Verbraucher im Energieverteilungsnetz 100 berücksichtigt werden können.

Ferner können durch Preis-/Strom-Tabellen Ladeempfehlungen erzeugt werden, die insbesondere anhand bekannter Kilowattstunden-Bezugspreise (gegebenenfalls Hochtarif/Niedertarif), den aktuellen Phasenlasten und erlernter Leistungskurven des Haushalts-bzw. des Betreibers erzeugt werden. Stehen sogenannte smarte Stromtarife zur Verfügung, so können diese über geeignete Schnittstellen eingelesen und verarbeitet werden.

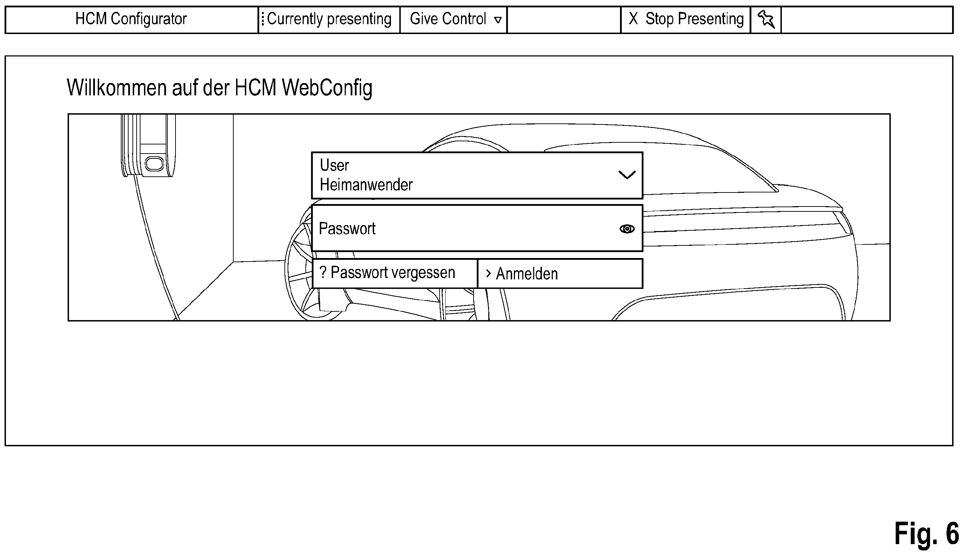

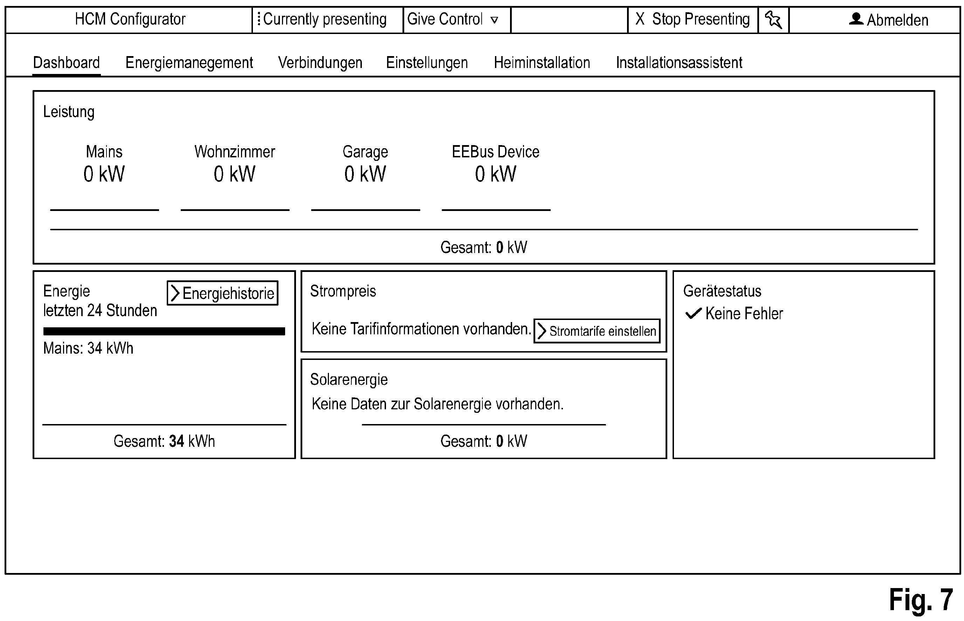

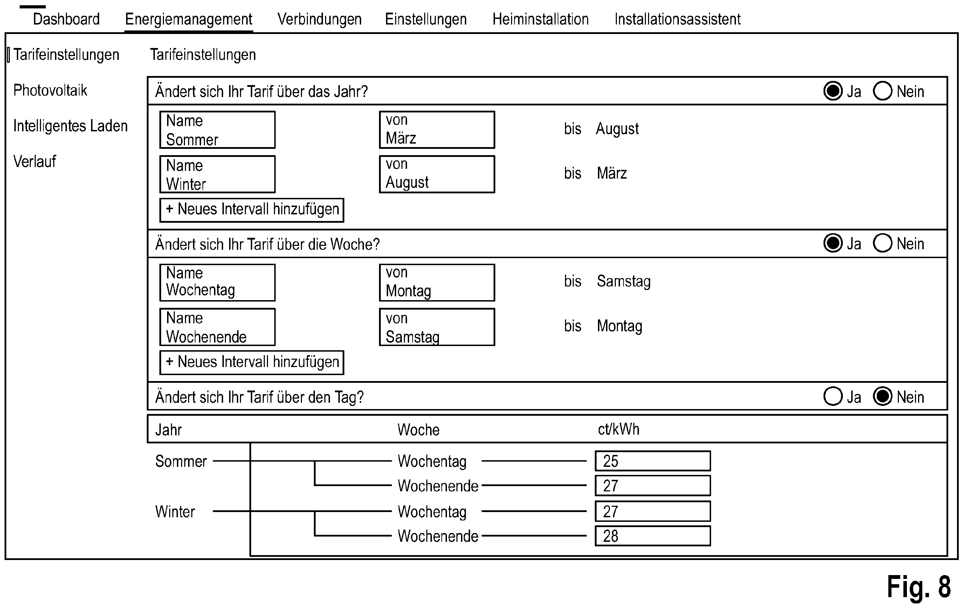

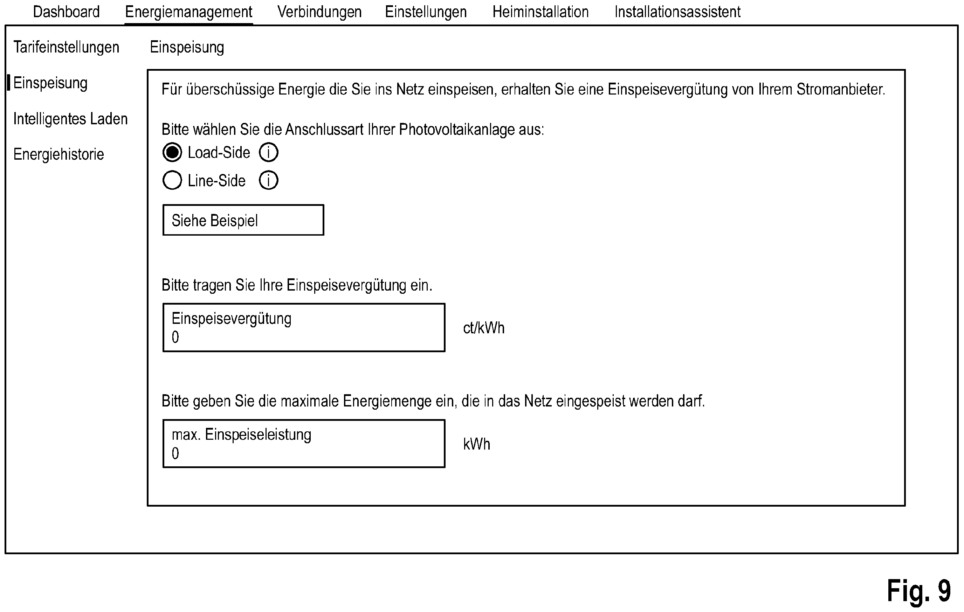

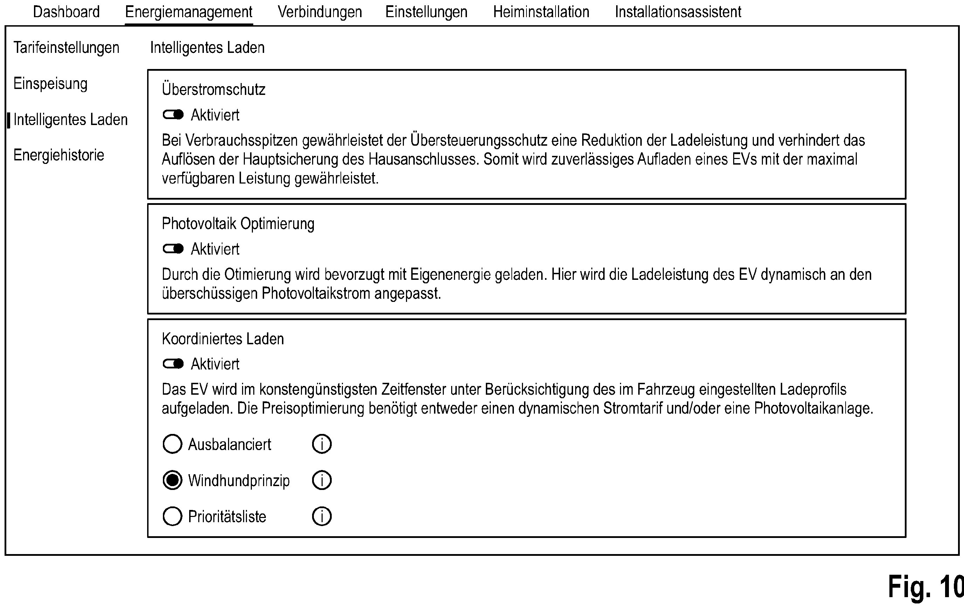

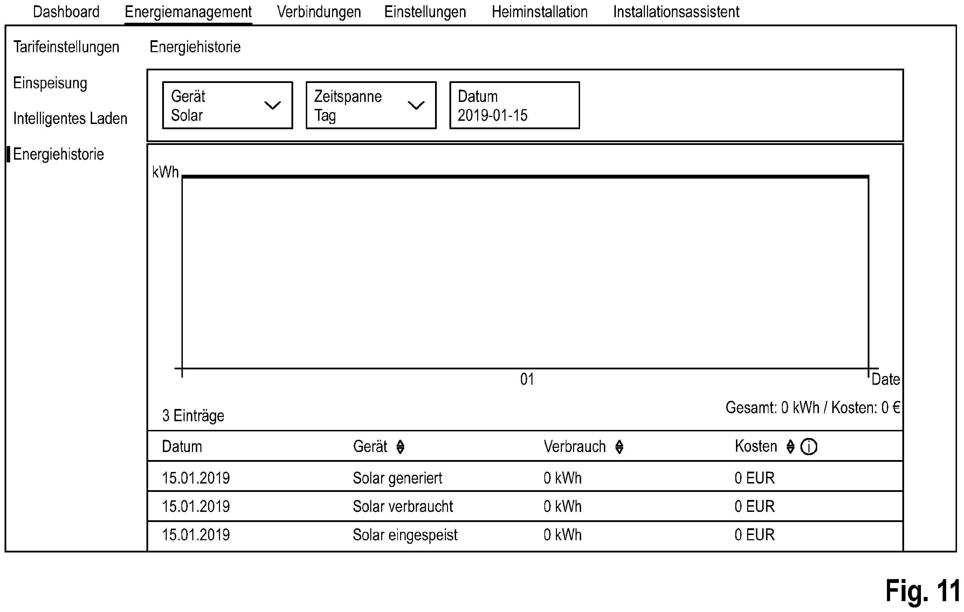

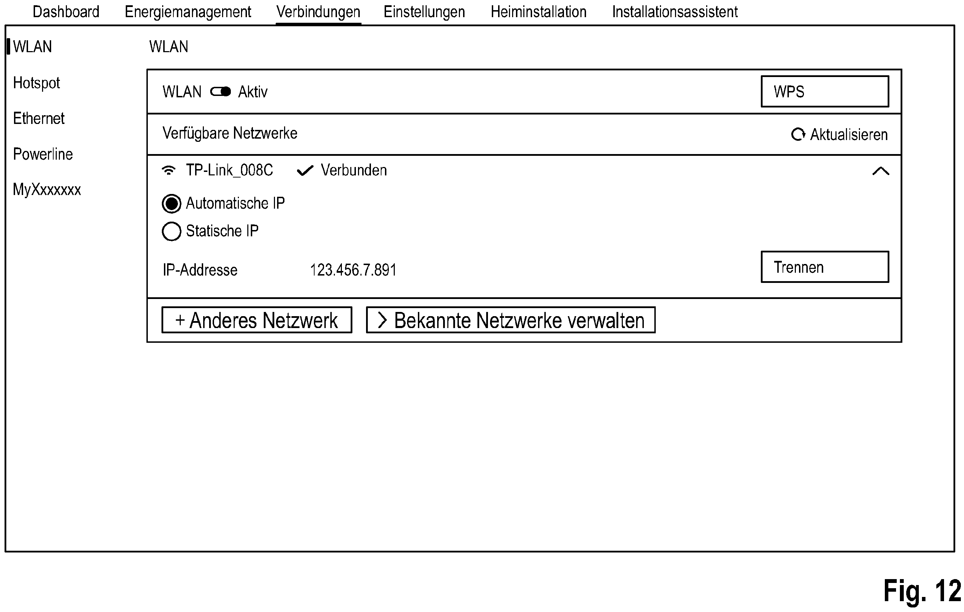

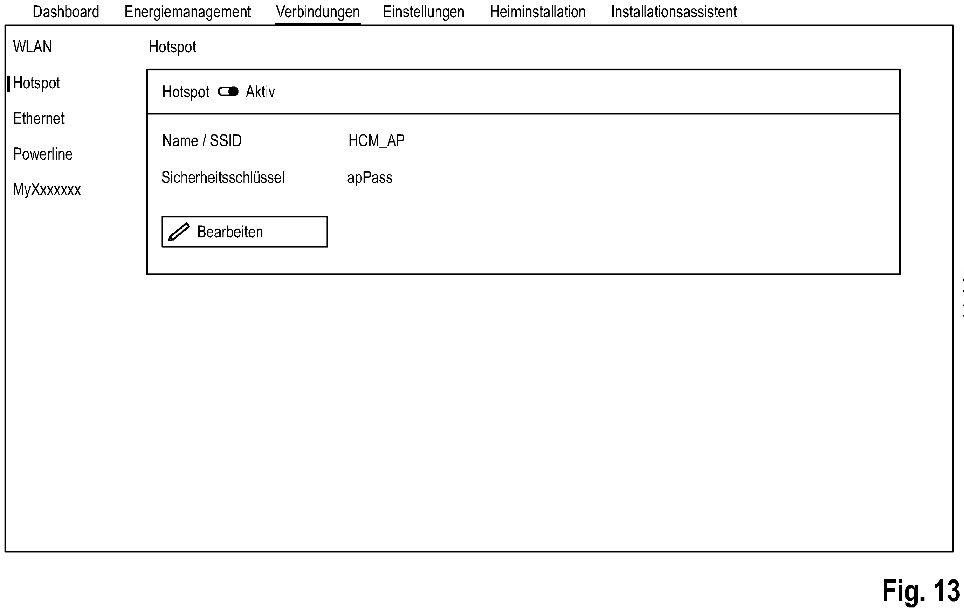

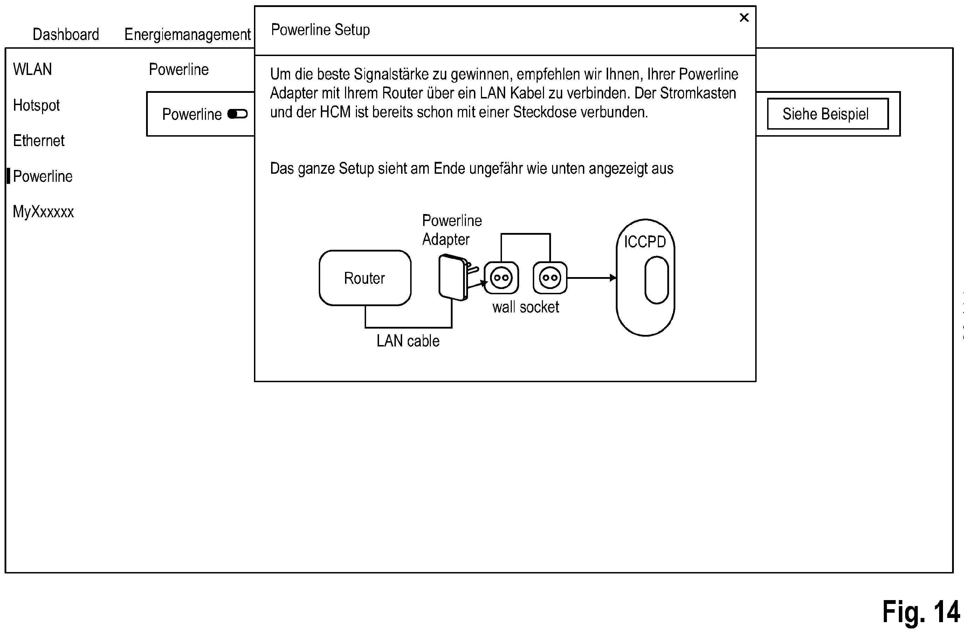

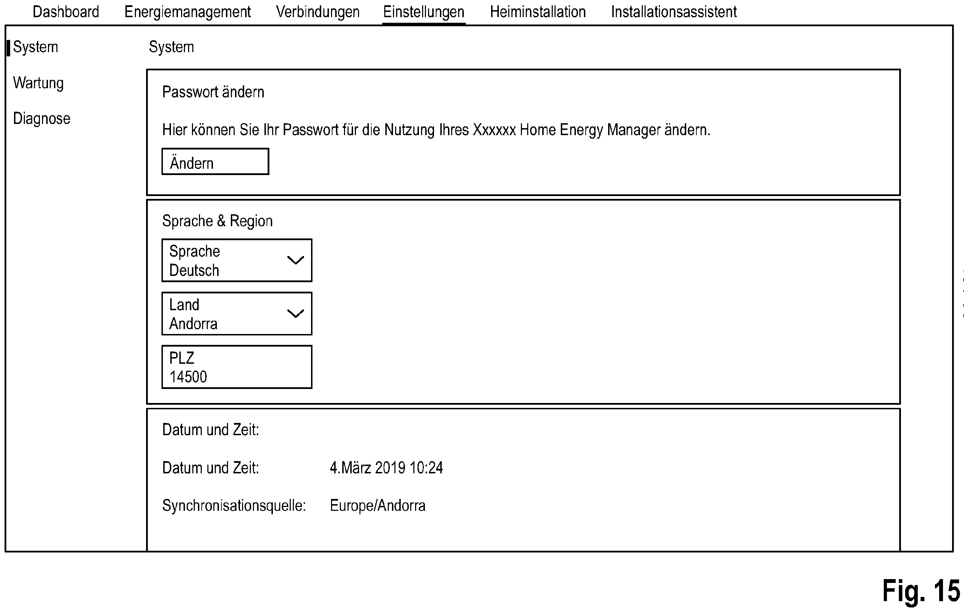

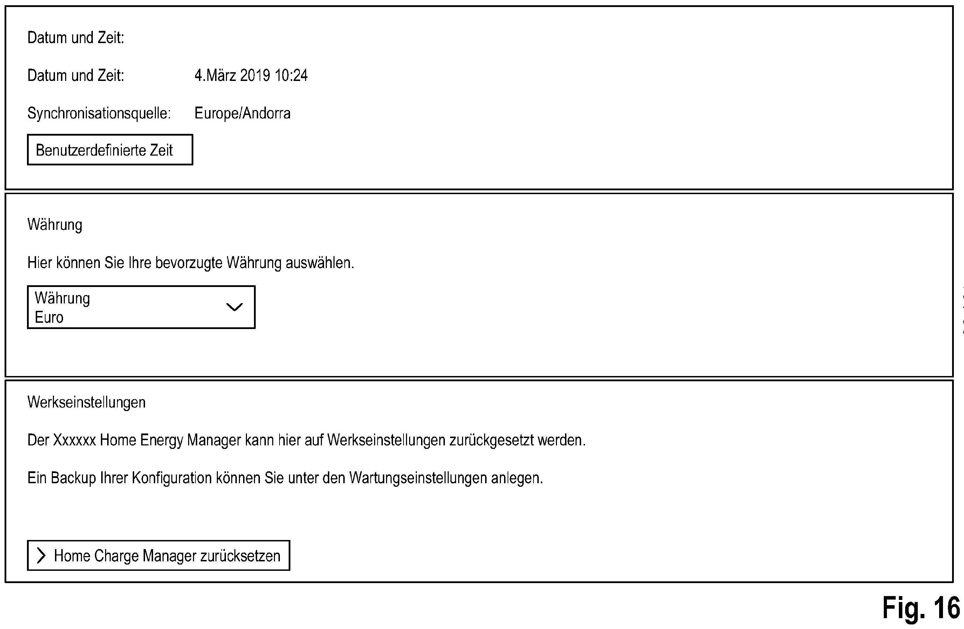

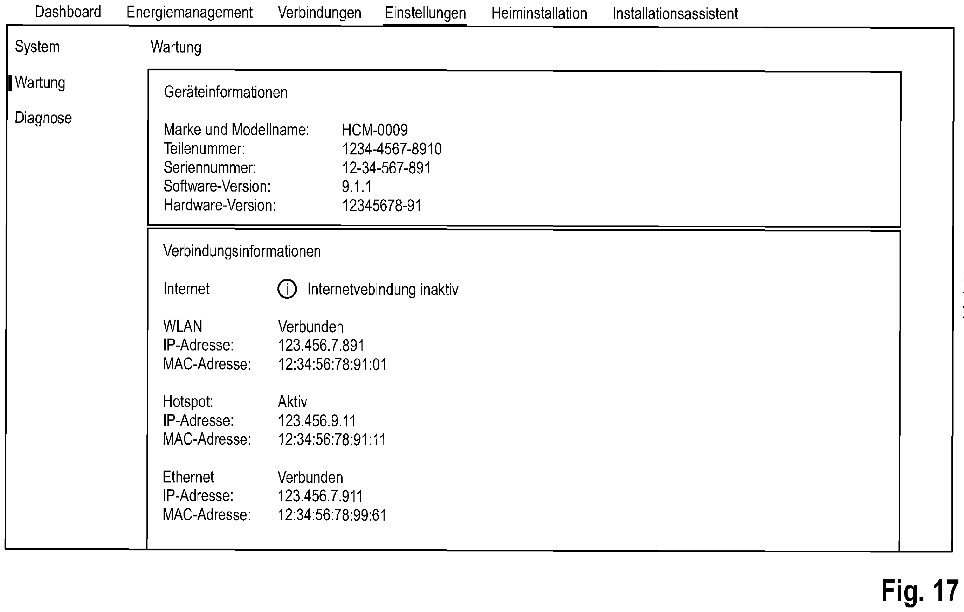

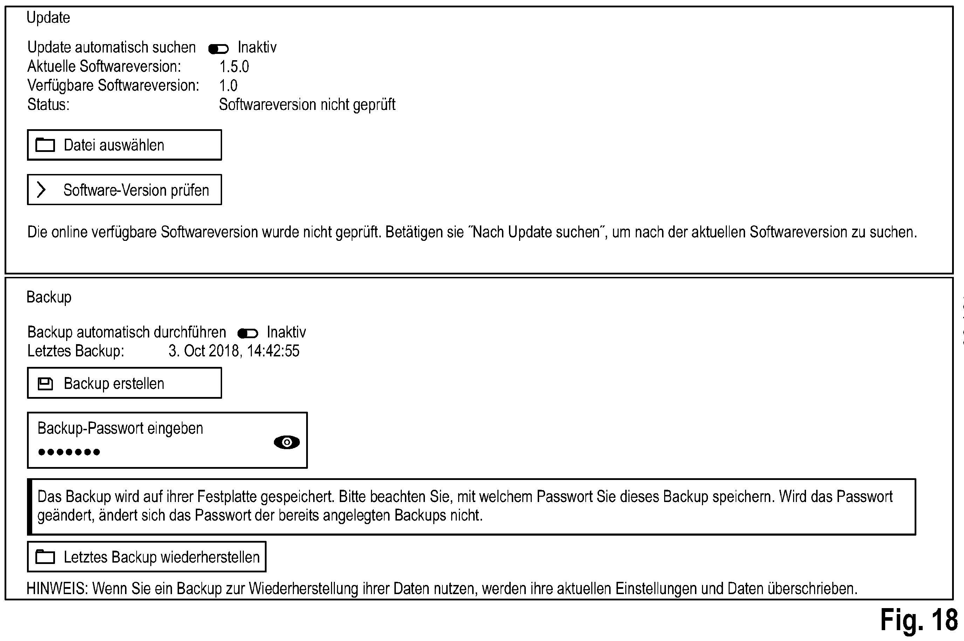

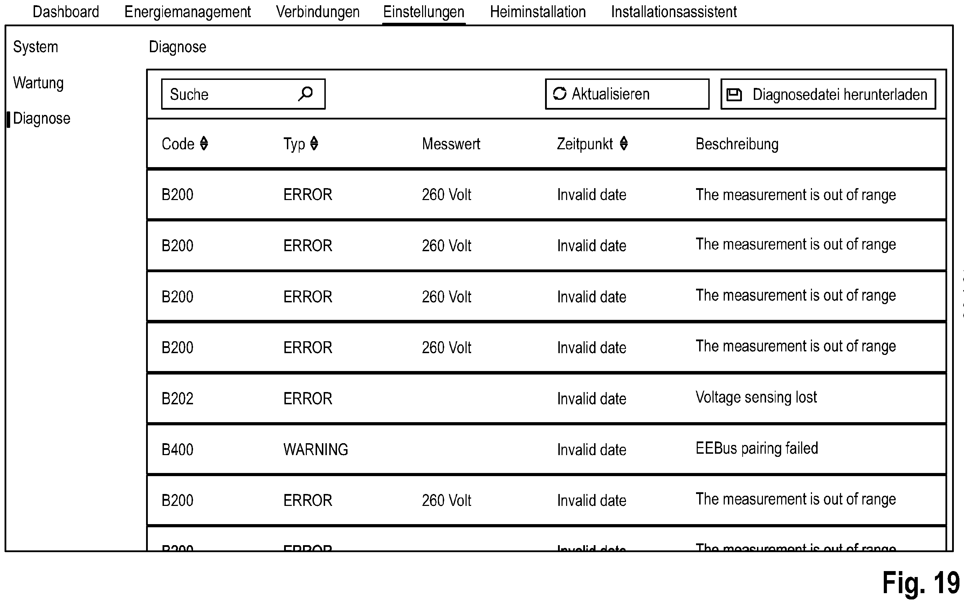

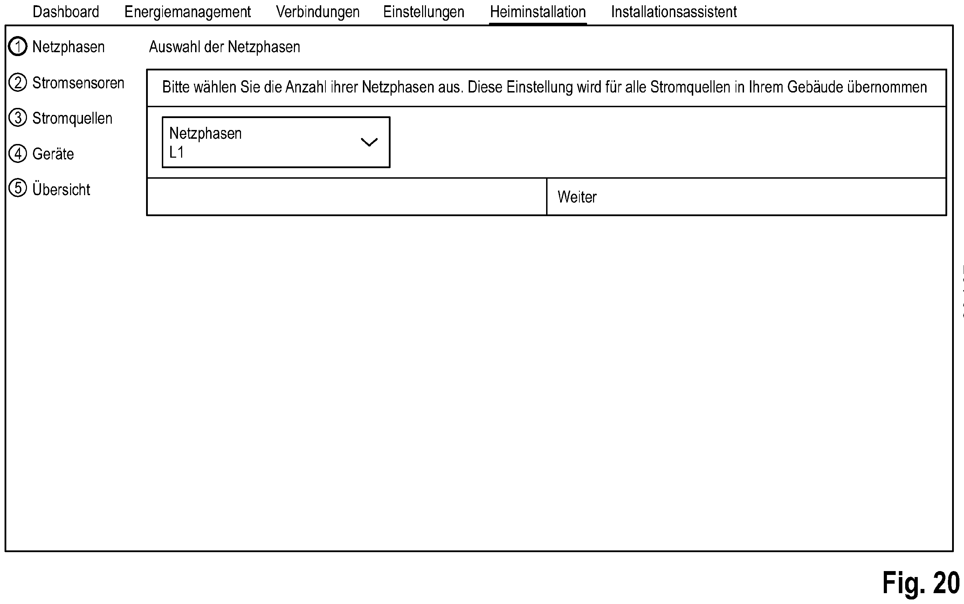

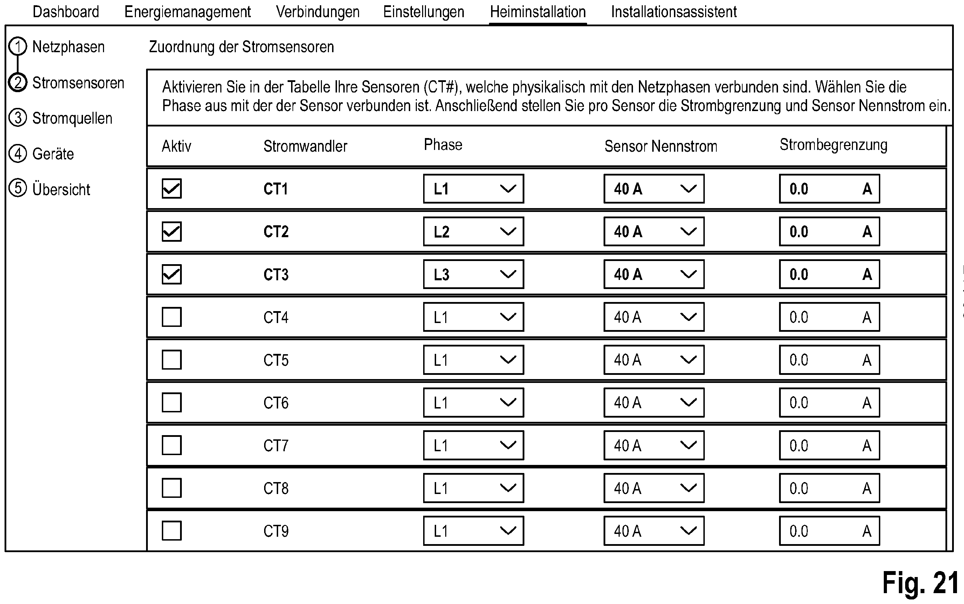

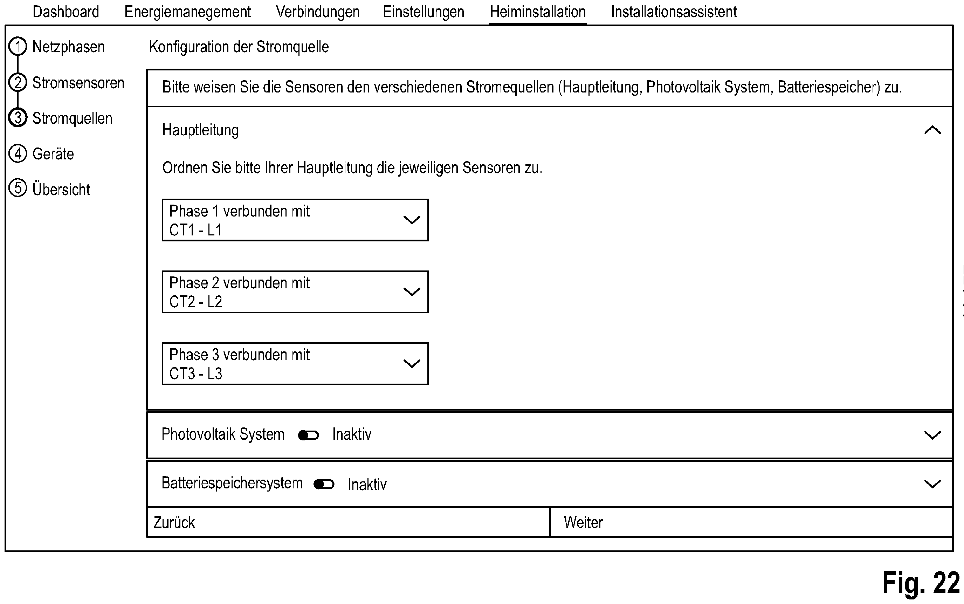

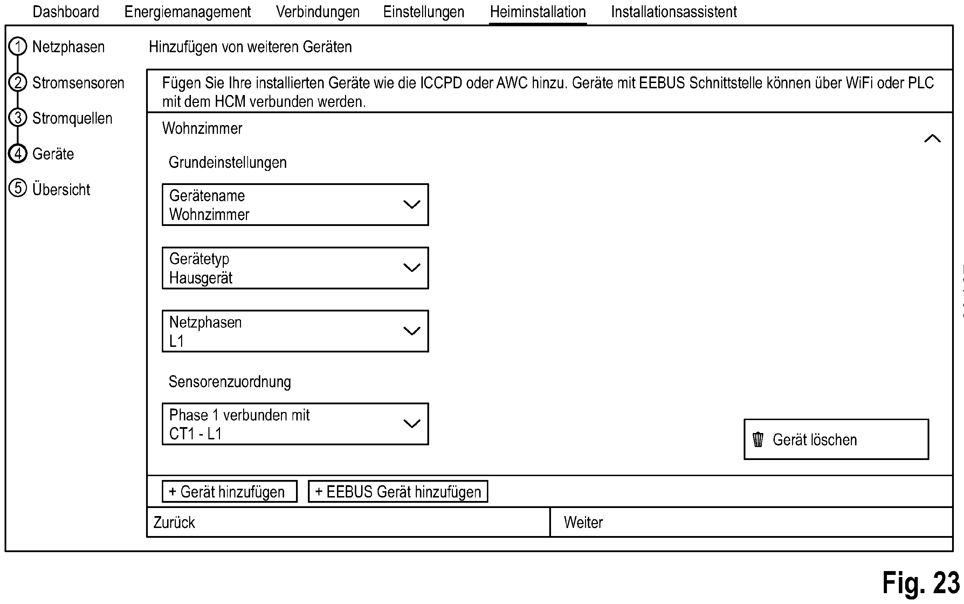

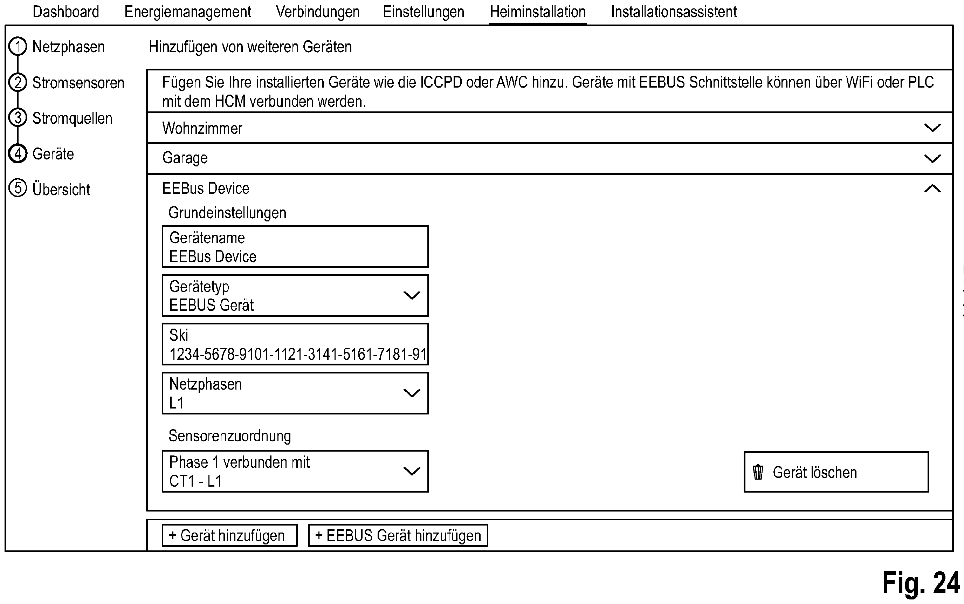

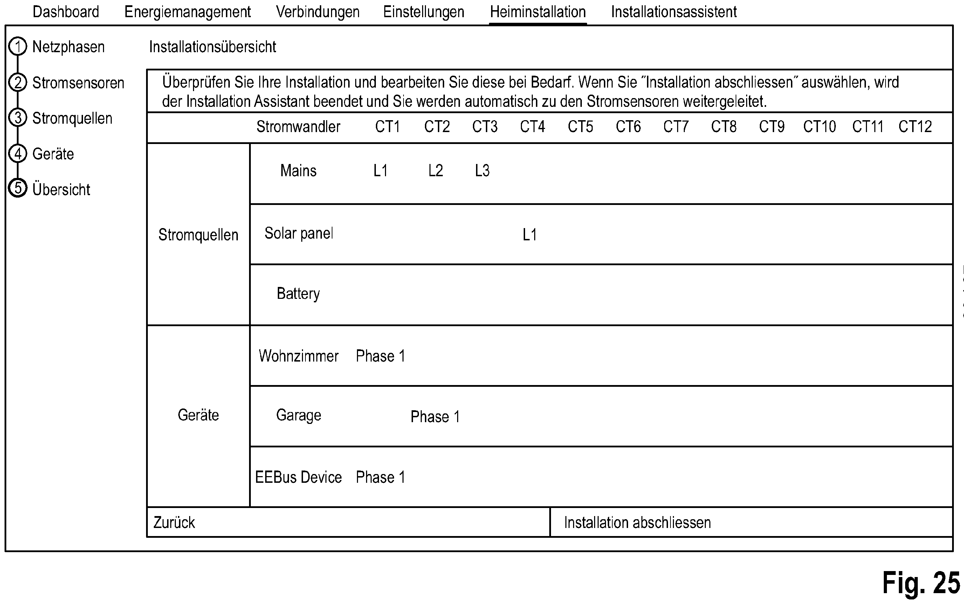

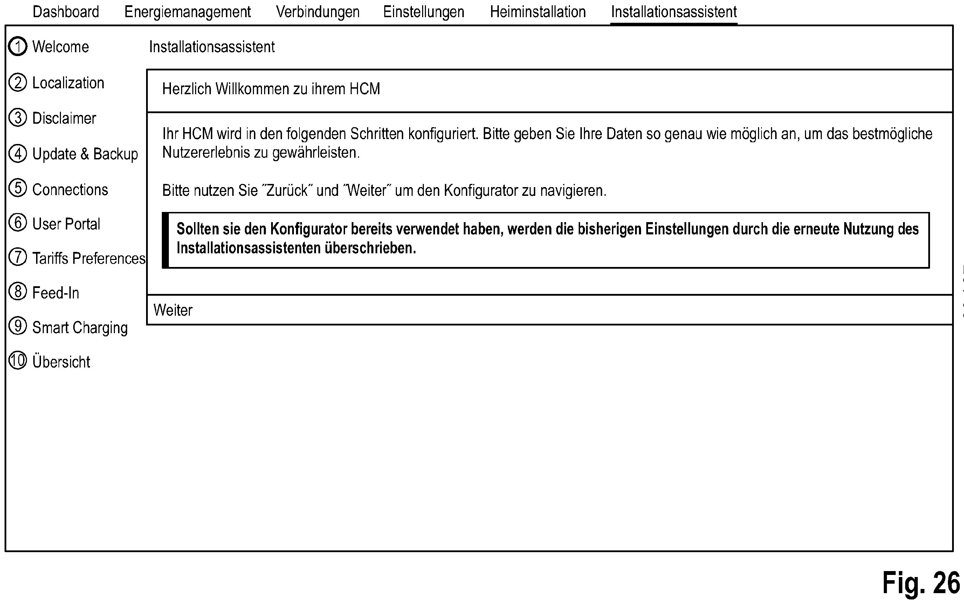

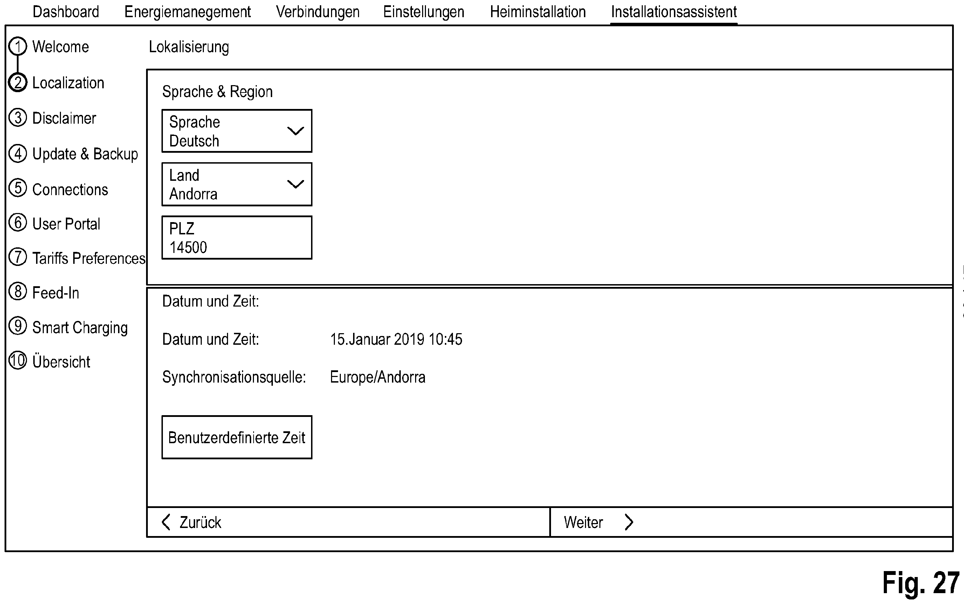

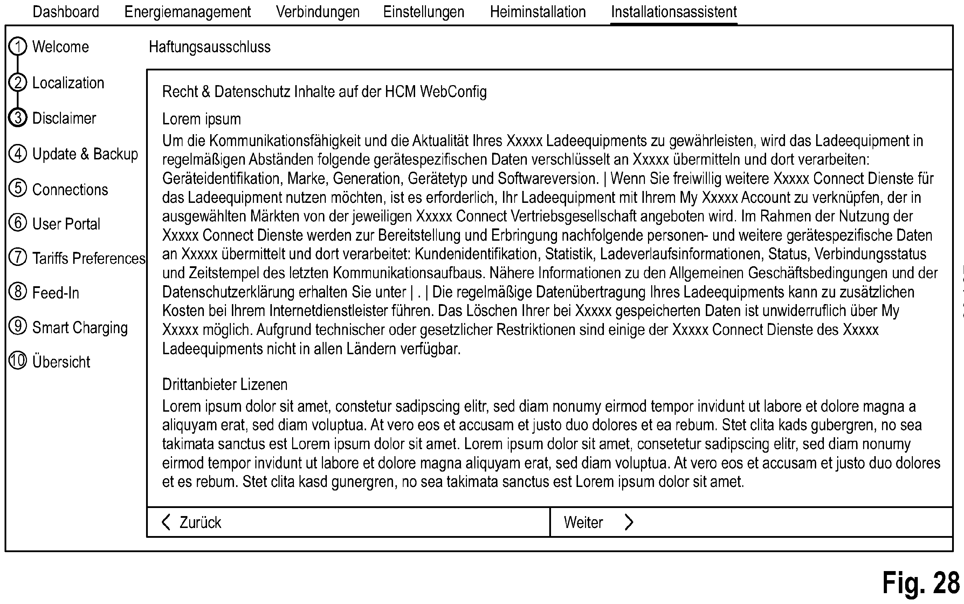

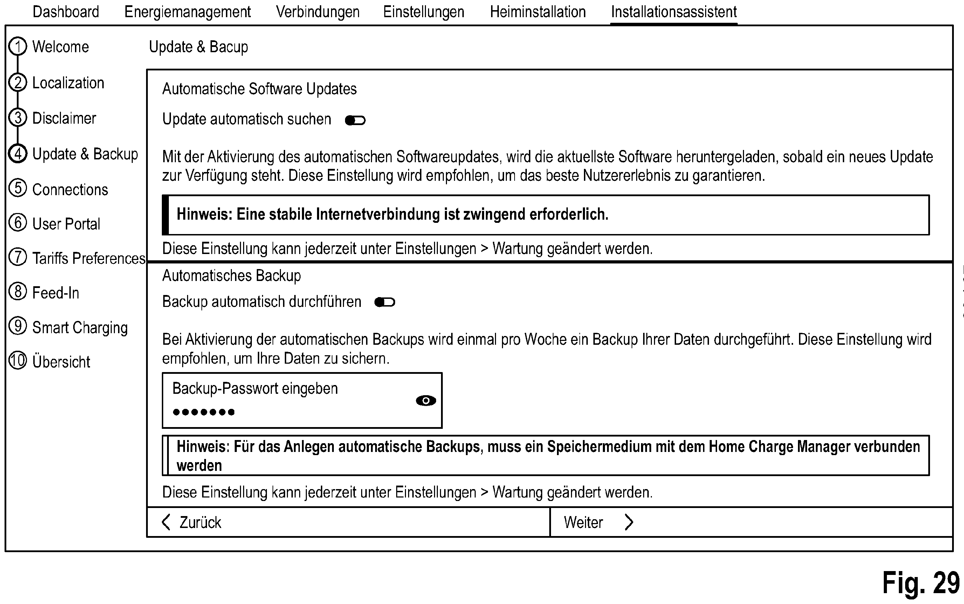

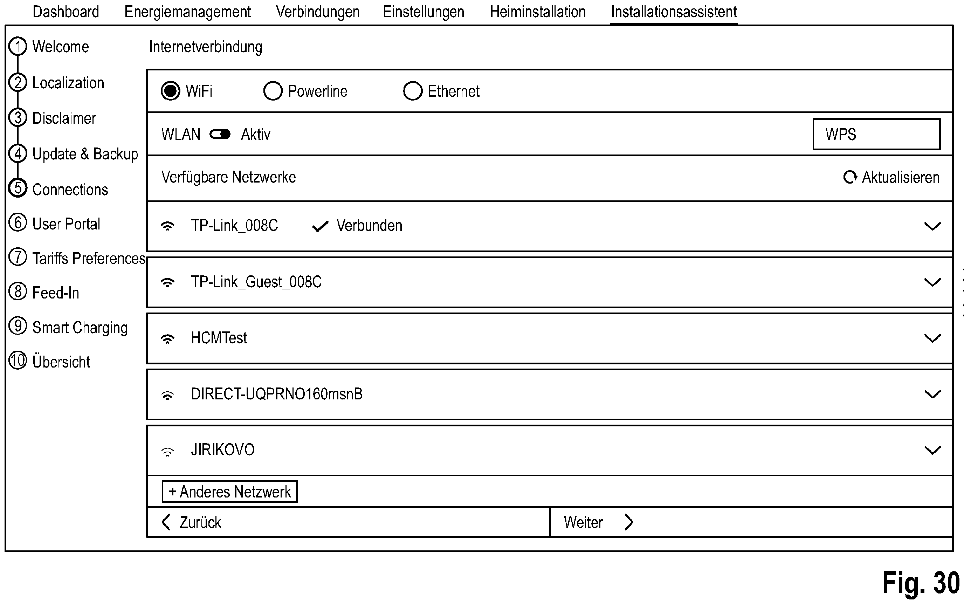

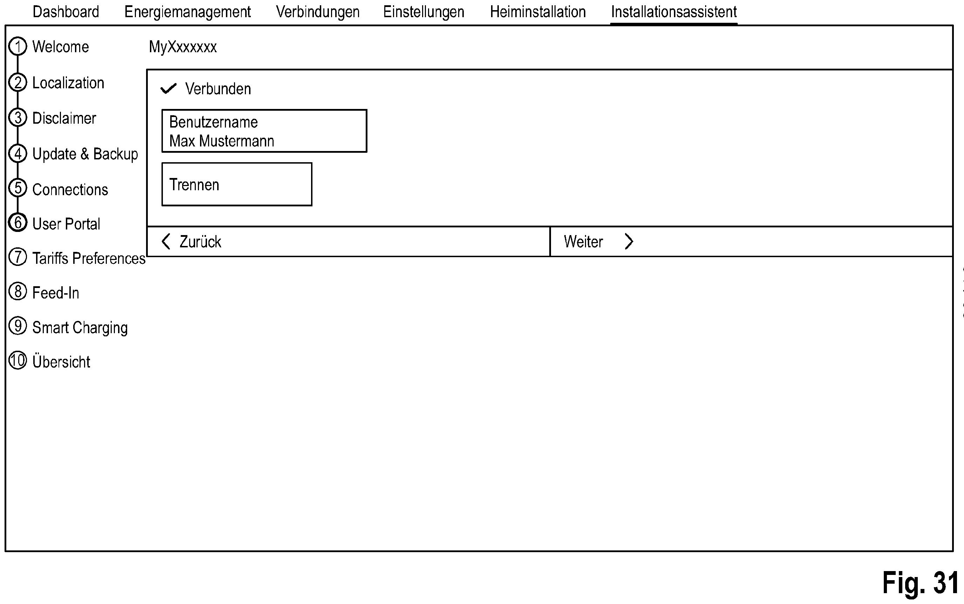

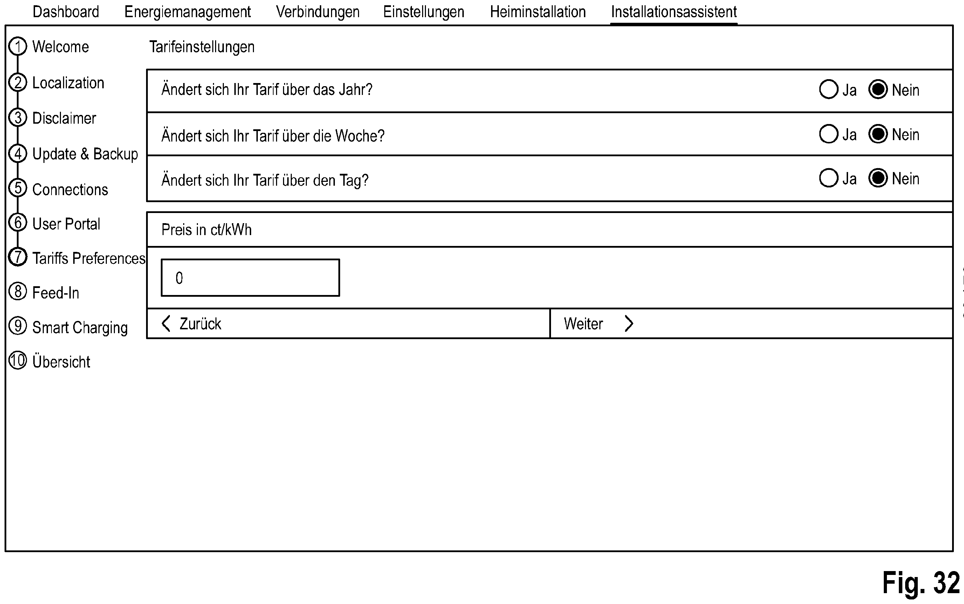

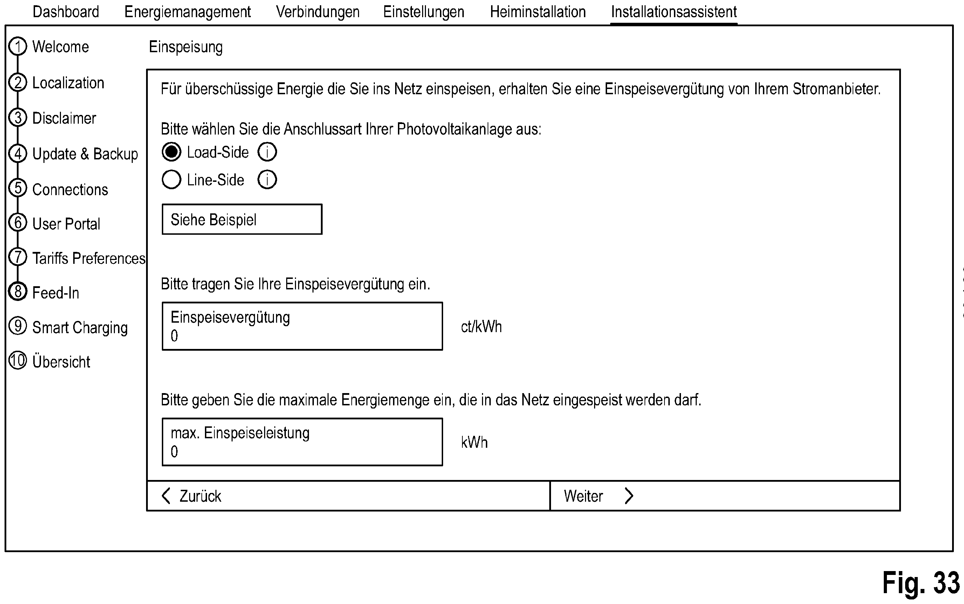

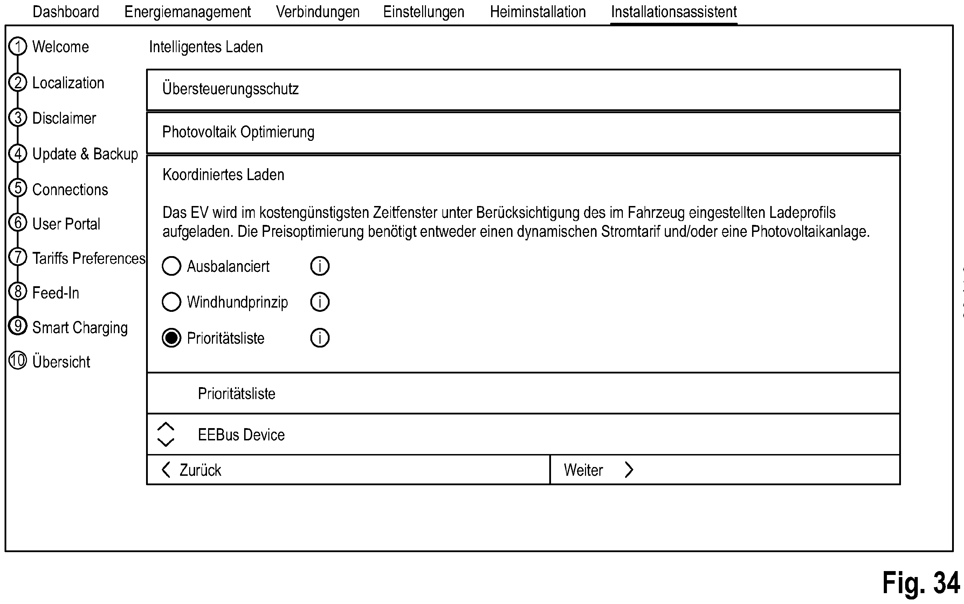

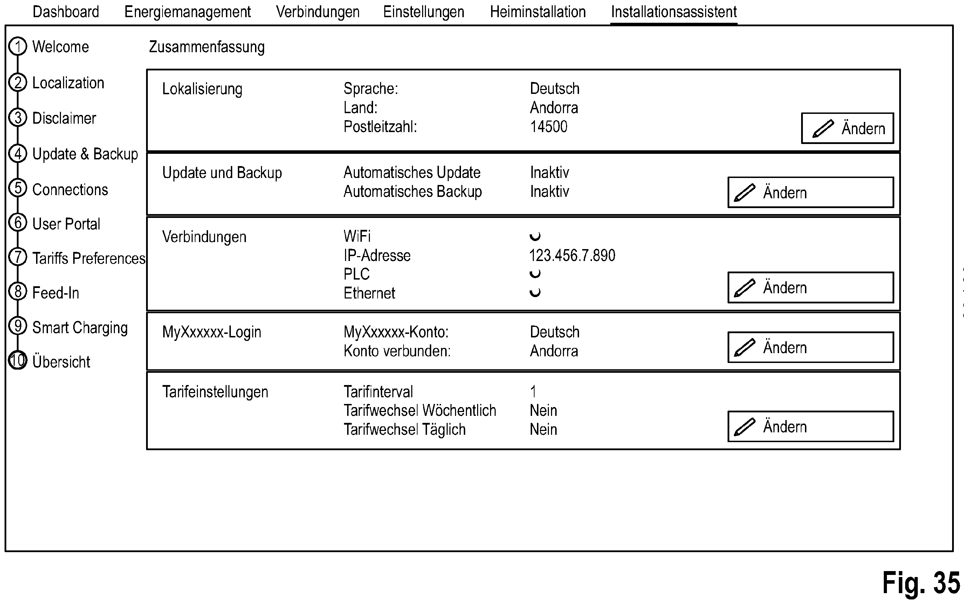

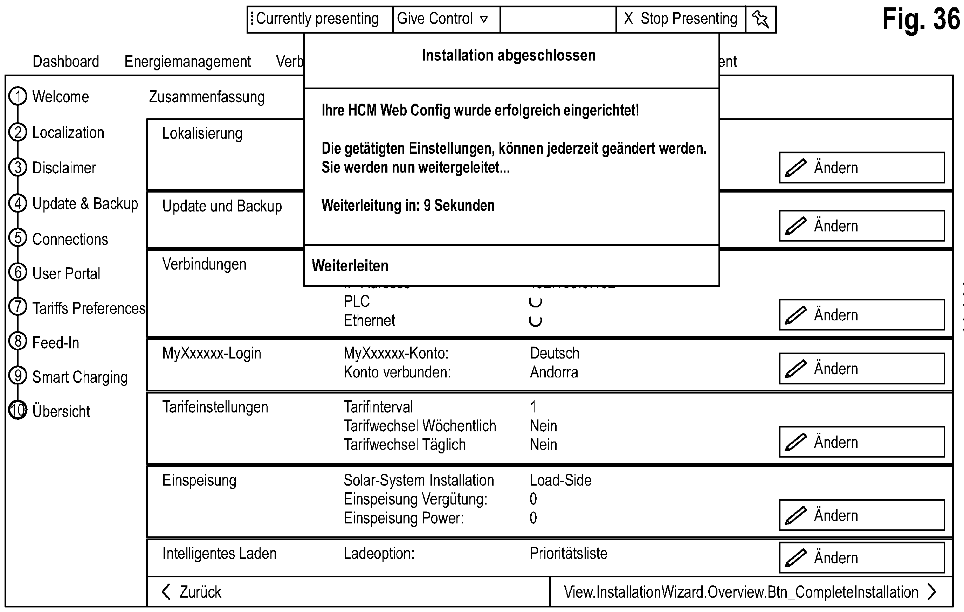

Die Regelungseinheit 30 des Lastverwaltungssystems 20 kann mittels einer Benutzeroberfläche, die insbesondere in Form einer Web-Schnittstelle vorliegt, konfiguriert werden. So kann mittels der Benutzeroberfläche die Inbetriebnahme und/oder die Energieüberwachung konfiguriert werden und eine Ferndiagnose des Lastverwaltungssystems durchgeführt werden. Die Benutzeroberfläche ist in den Figuren 6 bis 36 wiedergegeben.

Die Stromwandler 40, 42, 44 können austauschbar sein und jeweils ein auf die Leitung, in welcher die Stromstärke gemessen wird, angepasstes Kaliber aufweisen. So können beispielsweise Stromwandler vorgesehen sein, die für Stromstärken von maximal 50 A bis maximal 1000 A ausgebildet sind.

Durch diese Ausgestaltung kann das Lastverwaltungssystem 20 flexibel an das zu überwachende Energieverteilungsnetz 100 angepasst werden.

Das Lastverwaltungssystem 20 kann ferner Schalter zum Ansteuern bzw. zum An- und Abschalten weiterer Komponenten/Geräte des Energieverteilungsnetzes 100 umfassen.

Das anmeldungsgemäße Lastverwaltungssystem 20 ist insbesondere auf den Einsatz in Energieverteilungsnetzen 100 bestimmt, in welchen wenigstens eine Ladestation 120 angeordnet ist.

Ein solches anmeldungsgemäßes Lastverwaltungssystem 20 kann auch als Lastmanagementsystem bezeichnet werden.

Mittels des Lastverwaltungssystems 20 ist ein intelligentes Energiemanagement für das Energieverteilungsnetz 100 möglich.

Das Energieverteilungsnetz 100 kann einen Batterie- oder Wärmepufferspeicher umfassen. Das Energiemanagement kann das Verwalten des Batterie- oder Wärmepufferspeichers umfassen.

Mittels des anmeldungsgemäßen Lastverwaltungssystems 20 ist ferner eine Überwachung einer Rückspeisung ins Stromnetz über die Netzanschlussleitung 110 möglich.

Die Ladestation 120 kann eine Ladestation sein, die ein Ladekabel mit integriertem Leitungsschutz umfasst (ICCPD Basis Plus und ICCPD High).

Das Energiemanagement kann eine Last-und Solarstromprognose umfassen, die vorzugsweise in ein erlerntes Lastverhalten des Energieverteilungsnetzes 100 einfließt. Das erlernte Lastverhalten kann ferner aktuelle Strom- und Spannungswerte als auch Wetterdaten vereinen.

Ein weltweiter Einsatz des Lastverwaltungssystems 20 kann unter anderem durch austauschbare Stromwandler 40, 42, 44 gewährleistet sein, die einen flexiblen, auf das jeweilige Energieverteilungsnetz 100 angepassten Messbereich ermöglichen.

Das Lastverwaltungssystem 20 kann ferner eine automatische Phasenerkennung umfassen, mittels welcher erkannt werden kann, anhand welcher Phase ein Verbraucher versorgt wird, dessen Stromstärke mittels eines der Stromwandler 40, 42, 44 überwacht wird.

Zur automatischen Phasenerkennung kann eine geringfügig reduzierte Stromstärke auf der bestimmten Phase bereitgestellt werden, wobei eine durch einen der Stromwandler 40, 42, 44 gemessene reduzierte Stromstärke darauf schließen lässt, dass der Stromwandler 40, 42, 44 durch die bestimmte Phase gespeist wird.

Ferner kann eine automatische Erkennung des Wirkleistungsfaktors (Cosinus-Phi) zur Detektion des Netzes (regional) über die Stromwandler 40, 42, 44 und die Spannungsmesseinrichtung 32 erfolgen.

Durch eine Überwachung der einzelnen Phasen wird ein asymmetrisches Laden des elektrisch betriebenen Kraftfahrzeugs möglich, um eine Lastsymmetrie im Energieverteilungsnetz 100 zu begünstigen oder herzustellen.

In einer besonderen Ausführungsform des Lastverwaltungssystems 20 werden Statistiken über Energieverbräuche mit automatischen Tipps zur Steigerung der Energieeffizienz bereitgestellt, beispielsweise über die Benutzeroberfläche.

Die Anmeldung betrifft ferner ein Verfahren zur Regelung eines anmeldungsgemäßen Lastverwaltungssystems. Das Verfahren umfasst folgende Verfahrensschritte:
- kontinuierliches Messen der in der Netzanschlussleitung 110 vorherrschenden Stromstärke mittels des ersten Stromwandlers; und
- Reduzieren eines Ladestroms der Ladestation 120, wenn die in der Netzanschlussleitung 110 gemessene Stromstärke einen vorbestimmten ersten Schwellwert überschreitet.

Die Netzanschlussleitung 110 kann insbesondere eine dreiphasige Netzanschlussleitung sein. Dann kann der erste Stromwandler 40 zur Messung des Stromes der einzelnen Stromphasen ausgebildet sein. D.h., dass das anmeldungsgemäße Lastverwaltungssystem bei einer dreiphasigen Netzanschlussleitung insgesamt drei erste Stromwandler 40 aufweisen kann, die jeweils zur Messung des Stromes einer einzelnen Stromphase ausgebildet sind. Im Falle einer dreiphasigen Netzanschlussleitung kann die Spannungsmesseinrichtung 32 der Regelungseinheit 30 zum Messen jeder an der jeweiligen Phase der Netzanschlussleitung anliegenden Spannung ausgebildet sein.

Ein solcher, erster Schwellwert kann zur Reduktion eines Ladestroms dienen. Der erste Schwellwert kann beispielsweise geringfügig unterhalb der maximal zulässigen Stromstärke der Netzanschlussleitung 110 liegen.

Die Ladestation 120 kann abgeschaltet werden, wenn der Ladestrom einen vorbestimmten minimalen Ladestrom unterschreitet. So kann die Ladestation 120 insbesondere dann abgeschaltet werden, wenn durch eine weitere Reduzierung des Ladestroms der minimale Ladestrom der Ladestation 120 unterschritten wird.

Der Ladestrom der Ladestation 120 kann ferner reduziert werden und/oder die Ladestation 120 kann abgeschaltet werden, wenn ein Stromtarif, der zu diesem Zeitpunkt für die Netzanschlussleitung 110 gilt, ein Hochtarif ist.

Der Ladestrom der Ladestation 120 kann erhöht werden, wenn die in der Netzanschlussleitung 110 gemessene Stromstärke einen vorbestimmten zweiten Schwellwert unterschreitet.

Der Ladestrom der Ladestation 120 kann ferner dann erhöht werden, wenn ein Stromtarif, der zu diesem Zeitpunkt für die Netzanschlussleitung 110 gilt, ein Niedertarif ist.

Die Regelungseinheit 30 kann ein Rundsteuersignal, das auf den mittels der Netzanschlussleitung 110 bereitgestellten Strom aufmoduliert ist, auslesen, um zu bestimmen, ob ein Stromtarif, der zu diesem Zeitpunkt für die Netzanschlussleitung 110 gilt, ein Niedertarif oder ein Hochtarif ist.

In einer bevorzugten Ausgestaltung des Lastverwaltungssystems 20 bzw. des anmeldungsgemäßen Verfahrens werden Gerätelastprofile angewendet. D.h., dass das Lastverwaltungssystem anhand des aktuellen Lastprofils erkennt, welche Arten von Geräten im Energieverteilungsnetz 100 zu diesem Zeitpunkt mit Energie versorgt werden und somit beispielsweise den Energiebedarf des zu ladenden Kraftfahrzeugs ungünstig beeinflussen. So werden beispielsweise kurzzeitige Schwankungen im Energieverbrauch der im Energieverteilungsnetz 100 versorgten Geräte abgewartet, bis ein kontinuierlicher Ladestrom wieder zur Verfügung steht.

Das Lastverwaltungssystem 20 und insbesondere die Regelungseinheit 30 des Lastverwaltungssystems 20 kann ausgebildet sein, um Tonfrequenz-Rundsteuer-Signale interpretieren zu können und daraus Preis-Leistungstabellen unterschiedlicher Stromtarife gewinnen zu können.

Eine weitere Schnittstelle zur Vermittlung von Informationen an einen Benutzer kann mittels eines Sprachausgangs an einem Netzwerklautsprecher des Lastverwaltungssystems 20 durch Text-to-Speech-Befehle vorgesehen sein. Dabei kann der Benutzer über eine Sprachausgabe über relevante Energieinformationen informiert werden, wie beispielsweise:
- "Strom ist günstig ";
- "Elektrofahrzeug ist aktuell zu X Prozent geladen";
- "Hinweis: Ihr Elektrofahrzeug wurde in der Garage detektiert und ist aktuell nicht an die Ladevorrichtung angeschlossen";
- "Meldungen über übermäßige oder ungewöhnliche Energieverbräuche"; und
- "Meldung von Gerätezuständen über Auswertung von Energieprofilen".

Das Lastverwaltungssystem 20 und insbesondere die Regelungseinheit 30 des Lastverwaltungssystems 20 ist in der Lage, Informationen über Stromleitungen auszutauschen, insbesondere mittels sogenannter Powerline Communication (PLC).

Die Regelungseinheit 30 ist ferner in der Lage, mittels dieser Powerline Communication auch über den Trafo des Verteilungsnetzbetreibers die Ladestationen 120 für Elektrofahrzeuge verschiedener Haushalte anzusteuern, um eine Überlast im Leitungsstrang zu vermeiden.

Mittels des anmeldungsgemäßen Verfahrens kann eine Konfiguration der Regelungseinheit 30 des Lastverwaltungssystems 20 durch einen Servicetechniker via einer Benutzeroberfläche erfolgen, ohne dass der Servicetechniker Zugriff auf das private Kundennetzwerk erhält.

Über dieselbe Benutzeroberfläche sind auch eine Energieüberwachung und eine Ferndiagnose möglich. Auch die Eingabe von zeitabhängigen Stromtarifen ist über die Benutzeroberfläche möglich. Die Benutzeroberfläche ist in den Figuren 6 bis 36 wiedergegeben.

Mittels des Lastverwaltungssystems 20 können Preis-und Leistungstabellen nach ISO/IEC 15118 als Ladeempfehlung für Elektrofahrzeuge erzeugt werden.

Das Lastverwaltungssystem 20 und insbesondere die Regelungseinheit 30 kann mit Wechselstrom-Ladestationen und/oder Gleichstrom-Ladestationen für Kraftfahrzeuge kompatibel sein.

Im Folgenden werden die Funktionalitäten der Benutzeroberfläche beschrieben.

Auf einer ersten Oberfläche der Benutzeroberfläche werden Zugangsdaten des Benutzers abgefragt (Benutzername und Passwort). Im Anschluss wird die Ansicht in sechs Reiter aufgeteilt. Diese sind in den Figuren wie folgt bezeichnet: Dashboard, Energiemanagement, Verbindungen, Einstellungen, Heiminstallation und Installationsassistent.

Das Dashboard zeigt eine Übersicht der aktuell erfassten Leistungen an den überwachten Systemkomponenten an. Weiter wird der Energieverbrauch zusammen mit einer auswählbaren Energiehistorie angegeben. Es wird der aktuelle Strompreis und der Gerätestatus der zugehörigen Komponenten des Lastverwaltungssystems angegeben. Schließlich wird noch die Einbindung von erneuerbaren Energien zum Beispiel von Solarenergie angegeben.

Unter dem Reiter Energiemanagement gibt es vier Unterpunkte: Tarifeinstellungen, Einspeisung, intelligentes Laden und Energiehistorie.

Bei den Tarifeinstellungen können Informationen zu den aktuellen Stromtarifen eingestellt werden: z.B. Hochtarif (HT)/Niedrigtarif (NT) mit Kosten pro kWh und den Zeiträumen, zu welchen diese gelten.

Bei der Einspeisung kann als erstes ausgewählt werden, wie z.B. eine Energieerzeugungseinrichtung 130, insbesondere eine Photovoltaikanlage im Energieverteilungsnetz 100 angeschlossen ist. Weiter kann die Einspeisevergütung und die maximal erlaubte Energiemenge, die eingespeist werden darf, eingegeben werden.

Beim intelligenten Laden kann ein Überstromschutz aktiviert werden, der einen Black-out-Schutz und Laden mit maximaler Leistung ermöglicht. Weiter gibt es die Photovoltaikoptimierung, bei der vornehmlich mit selbst generiertem Strom geladen wird und die Ladeleistung entsprechend angepasst wird. Schließlich gibt es noch ein koordiniertes Laden. Mit dieser Funktion wird im kostengünstigsten Zeitfenster unter Berücksichtigung des Fahrzeugladeprofils geladen. Dabei können drei Bevorzugungen ausgewählt werden: Ausbalanciert, Windhundprinzip und Prioritätsliste.

Bei der Auswahl von Ausbalanciert bekommt jedes Fahrzeug die gleiche Ladeleistung zur Verfügung gestellt. Beim Windhundprinzip gilt, wer zuerst kommt, bekommt die Leistung, die er haben möchte und der Rest geht an die weiteren Kunden. Bei der Prioritätsliste werden Kunden bzw. deren Fahrzeuge mit Prioritäten versehen und die höchste Priorität bekommt die Leistung, die für dieses Fahrzeug gewünscht ist.

Schließlich gibt es noch die Energiehistorie. In der Energiehistorie können graphisch als auch tabellarisch die Energieverbräuche oder -erzeugungen für ausgewählte Geräte über einen beliebigen Zeitraum dargestellt werden.

Der Reiter Verbindungen umfasst fünf Unterpunkte: WLAN, Hotspot, Ethernet, Powerline und MyXxxxxxx.

WLAN ermöglicht die Einstellung der Art des WLANs und welches Netzwerk ausgewählt wird. Weiter kann die IP-Adresse automatisch oder statisch ausgegeben werden. Hotspot ermöglicht die Generierung eines Hotspots mit Namen und Sicherheitsschlüssel. Bei Ethernet kann das Netzwerk über Ethernet eingerichtet werden. Powerline ermöglicht die Aktivierung einer Powerline, sodass die Kommunikation über diese stattfinden kann. Bei MyXxxxxxx wird dem Kunden Zugang zu seinem MyXxxxxxx Account gegeben, sodass die Daten auch dort hingesendet und erfasst werden.

Es folgt der Reiter Einstellungen mit drei Unterpunkten: System, Wartung und Diagnose.

Bei System kann das Passwort für das Lastmanagementsystem 20 geändert werden, weiter können die Sprache und Region ausgewählt werden. Auch das Datum und die Uhrzeit kann im folgenden Schritt eingestellt werden. Weiter kann die Währung eingestellt und auf die Werkseinstellungen zurückgesetzt werden.

Bei Wartung bekommt man die Geräteinformationen (Marke und Modell, Teilenummer, Seriennummer, Software-Version und Hardware-Version). Weiter bekommt man die Verbindungsinformationen inkl. z.B. der MAC-Adresse. Ein Softwareupdate kann ebenfalls vorgenommen werden. Dabei kann das Update online oder über weitere Verbindungen bereitgestellt werden, wozu die aktuelle Softwareversion angezeigt wird und überprüft wird, ob diese der neuesten verfügbaren Softwareversion entspricht. Schließlich kann ein Backup erzeugt werden. Dazu kann gewählt werden, ob ein Backup automatisch durchgeführt wird und ältere Backups können zur Wiederherstellung der alten Daten eingebunden werden. Bei der Diagnose können die registrierten Fehler angezeigt werden. Außerdem können diese in einer Datei heruntergeladen werden.

Der nächste Reiter ist die Heiminstallation mit fünf Unterpunkten: Netzphasen, Stromsensoren/Stromwandler, Stromquellen, Geräte und Übersicht. Bei den Netzphasen kann die Anzahl der Netzphasen ausgewählt werden, welche dann für alle Stromquellen in dem Energieverteilungsnetz 100 übernommen werden. Bei den Stromwandlern 40, 42, 44 können bis zu zwölf Sensoren/Wandler aktiviert werden, angegeben werden, auf welcher Phase diese sitzen, und welche Stromwerte für die Stromwandler 40, 42, 44 gelten. Bei den Stromquellen wird die Konfiguration der Stromquellen ermöglicht. Dort wird zugeordnet, welche Stromwandler 40, 42, 44 in der Netzanschlussleitung 110, welche in der Einspeiseleitung 114 und welche zum Beispiel beim Batteriespeicher liegen. Bei Geräte können die Geräte hinzugefügt werden, die überwacht werden und mit denen kommuniziert wird. Dazu können der Geräteort, der Gerätetyp, die Netzphase des Gerätes und die Sensorzuordnung (oder Wandlerzuordnung) angegeben werden. Weiter können EEBus kommunizierende Geräte hinzugefügt werden. Dabei werden der Gerätename, der Gerätetyp, die SKI-Nummer, die Netzphase und die Sensorzuordnung (oder Wandlerzuordnung) angegeben.

Schließlich gibt es die Übersicht, in der nochmal alle Stromwandler 40, 42, 44 und deren Zuordnungen zu Geräten und Stromquellen aufgelistet werden. Die Installation kann dort abgeschlossen werden oder zurückgesetzt werden, um diese nochmals zu bearbeiten.

Weiter unterscheidet sich das Lastverwaltungssystem 20 für ein Energieverteilungsnetz 100 eines einzelnen Haushalts von einem Lastverwaltungssystem 20 für ein Energieverteilungsnetz 100 einer Betriebsstätte dadurch, dass die Ausführungsform für eine Betriebstätte mit dem Lademangementserver in der Ladestation 120 kommuniziert und Istströme von der Ladestation 120 empfängt und Sollströme für die Ladestation 120 an die Regelungseinheit 30 sendet. Auch eine Zeitsynchronisation wird durchgeführt. Weiter ist geplant, maximale Ströme, Leistungswerte und die mittlere Wechselstrom-Spannung von der Ladestation 120 an die Regelungseinheit 30 zu senden.

Der letzte Reiter ist der Installationsassistent, welcher zehn Unterpunkte hat: Willkommen, Lokalisierung, Disclaimer, Update und Backup, Verbindungen, Userportal, Tarifpräferenzen, Einspeisung, Smart Charging und Übersicht. Bei Willkommen wird der Installationsassistent kurz vorgestellt. Bei der Lokalisierung wird auf "Einstellungen: System" zurückgegriffen und die Sprache und Region und Datum und Zeit eingestellt. Der Disclaimer beschreibt den Haftungsausschluss. Bei Update und Backup können wie unter "Einstellungen: Wartung" automatische Softwareupdates und Backups eingestellt werden. Verbindungen oder Internetverbindungen greifen auf den Reiter Verbindungen zu und lassen dort die Einstellungen WLAN, Powerline und Ethernet zu. Userportal greift auf "Verbindungen: MyXxxxxxx" zu und ermöglicht die Verbindung zum Userportal MyXxxxxxx.

Tarifpräferenzen oder Tarifeinstellungen greifen auf "Einstellungen: Tarifoptionen" zu und ermöglichen dort die Einstellungen der Tarife für Änderungen im Jahr, Monat oder am Tag. Einspeisung greift auf "Energiemanagement: Einstellungen" zurück und ermöglicht die gleichen Einstellungen wie dort z.B. für Solaranlagen. Smart Charging/Intelligentes Laden greift auf "Energiemanagement: Intelligentes Laden" zurück und ermöglicht die gleichen Einstellungen wie dort. Übersicht zeigt alle gemachten Eingaben nochmal an.

## Patentansprüche

1. Lastverwaltungssystem zur Verwaltung von in einem Energieverteilungsnetz (100) vorhandenen Lasten, umfassend eine Regelungseinheit (30) und wenigstens zwei jeweils mittels eines Signalkabels (41, 43, 45) mit der Regelungseinheit (30) verbundene Stromwandler (40, 42, 44), wobei ein erster Stromwandler (40) der wenigstens zwei Stromwandler (40, 42, 44) derart in dem Energieverteilungsnetz (100) angeordnet ist, dass er geeignet ist, eine Stromstärke, die in einer mit einem Energieversorgungsunternehmen verbundenen Netzanschlussleitung (110) des Energieverteilungsnetzes (100) vorherrscht, zu messen, wobei ein zweiter Stromwandler (42) der wenigstens zwei Stromwandler (40, 42, 44) derart in dem Energieverteilungsnetz (100) angeordnet ist, dass er geeignet ist, die Stromstärke, die in einer wenigstens eine Ladestation (120) des Energieverteilungsnetzes (100) speisenden Stromleitung (112) des Energieverteilungsnetzes (100) vorherrscht, zu messen.

2. Lastverwaltungssystem nach Anspruch 1, **gekennzeichnet durch** wenigstens einen dritten Stromwandler (44), der derart in dem Energieverteilungsnetz (100) angeordnet ist, dass er geeignet ist, eine Stromstärke, die in einer Einspeiseleitung (114) des Energieverteilungsnetzes (100), die mit einer energieerzeugenden Einrichtung (130) des Energieverteilungsnetzes (100) verbunden ist, vorherrscht, zu messen.

3. Lastverwaltungssystem nach einem der Ansprüche 1 oder 2, **dadurch gekennzeichnet, dass** die Regelungseinheit (30) ferner mit einer Spannungsmesseinrichtung (32) versehen ist, die geeignet ist, eine auf wenigstens einer Stromphase anliegende Spannung, insbesondere die auf einer Stromphase der Netzanschlussleitung (110) anliegende Spannung zu messen.

4. Lastverwaltungssystem nach einem der Ansprüche 1 bis 3, **dadurch gekennzeichnet, dass** die Stromwandler (40, 42, 44) analoge Stromwandler sind.

5. Lastverwaltungssystem nach einem der Ansprüche 1 bis 4, **dadurch gekennzeichnet, dass** die Regelungseinheit (30) ferner ein Kommunikationsmodul (34) zur kabelgebundenen Kommunikation und/oder zur Kommunikation mittels Funksignalen umfasst.

6. Lastverwaltungssystem nach einem der Ansprüche 1 bis 5, **dadurch gekennzeichnet, dass** der zweite Stromwandler (42) ein interner Stromwandler innerhalb der Ladestation (120) ist, wobei vorzugsweise durch den zweiten Stromwandler (42) erhaltene Messdaten mittels Powerline Communication an die Regelungseinheit (30), insbesondere an das Kommunikationsmodul (34) der Regelungseinheit (30) übertragbar sind.

7. Verfahren zur Regelung eines Lastverwaltungssystems nach einem der Ansprüche 1 bis 6, **gekennzeichnet durch** folgende Verfahrensschritte:
- kontinuierliches Messen der in der Netzanschlussleitung (110) vorherrschenden Stromstärke mittels des ersten Stromwandlers (40); und
- Reduzieren eines Ladestroms der Ladestation (120), wenn die in der Netzanschlussleitung (110) gemessene Stromstärke einen vorbestimmten ersten Schwellwert überschreitet.

8. Verfahren nach Anspruch 7, **dadurch gekennzeichnet, dass** die Ladestation (120) abgeschaltet wird, wenn der Ladestrom einen vorbestimmten minimalen Ladestrom unterschreitet.

9. Verfahren nach einem der Ansprüche 7 oder 8, **dadurch gekennzeichnet, dass** der Ladestrom der Ladestation (120) ferner reduziert wird und/oder die Ladestation (120) abgeschaltet wird, wenn ein Stromtarif, der zu diesem Zeitpunkt für die Netzanschlussleitung (110) gilt, ein Hochtarif ist.

10. Verfahren nach einem der Ansprüche 7 bis 9, **dadurch gekennzeichnet, dass** der Ladestrom der Ladestation (120) erhöht wird, wenn die in der Netzanschlussleitung (110) gemessene Stromstärke einen vorbestimmten zweiten Schwellwert unterschreitet.

11. Verfahren nach Anspruch 10, **dadurch gekennzeichnet, dass** der Ladestrom der Ladestation (120) ferner dann erhöht wird, wenn ein Stromtarif, der zu diesem Zeitpunkt für die Netzanschlussleitung (110) gilt, ein Niedertarif ist.

12. Verfahren nach einem der Ansprüche 7 bis 11, **dadurch gekennzeichnet, dass** die Regelungseinheit (30) ein Rundsteuersignal, das auf den mittels der Netzanschlussleitung (110) bereitgestellten Strom aufmoduliert ist, ausliest, um zu bestimmen, ob ein Stromtarif, der zu diesem Zeitpunkt für die Netzanschlussleitung (110) gilt, ein Niedertarif oder ein Hochtarif ist.
